# EUROPEAN PATENT SPECIFICATION

(11) **EP 4 120 114 B1**
(45) Date of publication and mention of the grant of the patent: **11.11.2026**
(21) Application number: 21860140.9
(22) Date of filing: 11.08.2021
(51) Int. Cl.: G06F 21/60, G06F 21/64, G06F 21/74, G06Q 30/0251, G06Q 30/018, G06Q 30/0241, G06Q 30/0601

(54) **DATA PROCESSING METHOD AND APPARATUS, SMART DEVICE AND STORAGE MEDIUM**
DATENVERARBEITUNGSVERFAHREN UND -VORRICHTUNG, INTELLIGENTE VORRICHTUNG UND SPEICHERMEDIUM
PROCÉDÉ ET APPAREIL DE TRAITEMENT DE DONNÉES, DISPOSITIF INTELLIGENT, ET SUPPORT D'ENREGISTREMENT

(30) Priority: 26.08.2020 CN 202010867531
(43) Date of publication of application: 18.01.2023
(73) Proprietor: Tencent Technology (Shenzhen) Company Limited, Shenzhen, Guangdong 518057 (CN)
(72) Inventor: ZHANG, Tao, Shenzhen, Guangdong 518057 (CN)
(74) Representative: Gunzelmann, Rainer
(86) International application number: PCT/CN2021/112020
(87) International publication number: WO 2022/042301

(56) References cited:
- CN-A- 109 871 709
- CN-A- 109 871 709
- CN-A- 110 400 164
- CN-A- 110 492 990
- CN-A- 110 492 990
- CN-A- 110 543 501
- CN-A- 110 544 095
- CN-A- 111 226 249
- CN-A- 111 522 874
- CN-A- 111 737 724
- US-A1- 2020 099 723
- MÜHLBERGER ROMAN ET AL: "Business Process Management Workshops : BPM 2019 International Workshops, Vienna, Austria, September 1-6, 2019, Revised Selected Papers", vol. 362, 3 January 2020 (2020-01-03), Cham, pages 690 - 703, XP093080115, ISSN: 1865-1348, ISBN: 978-3-030-37453-2, Retrieved from the Internet <URL:http://link.springer.com/content/pdf/10.1007/978-3-030-37453-2_55> DOI: 10.1007/978-3-030-37453-2_55

## Description

### FIELD OF THE TECHNOLOGY

The present disclosure relates to the field of computer technologies, and specifically, to a data processing method and apparatus, an intelligent device, and a computer-readable storage medium.

### BACKGROUND OF THE DISCLOSURE

With continuous development of computer technologies, many data transfer scenarios involve a process of verifying whether data is trustworthy. For example, a company A applies to a department B for a project, and the department B requires the company A to provide transaction data of the last three years to prove that the company A has the strength to complete the project. However, the transaction data of the company A is confidential and has not been disclosed through public media or a network. Therefore, after obtaining the transaction data of the last three years from the company A, the department B cannot determine whether the transaction data provided by the company A has been tampered with. Fake transaction data may mislead the department B to incorrectly determine the strength of the company A, thus affecting the project.

CN 109871709A discloses a blockchain privacy data storage method, including the following steps: calculating an information digest of an original file; signing the information digest through a private key; uploading the signed information digest to a blockchain system for storage, so that the public key corresponding to the private key can verify the information digest to verify the original file.

CN 110492990A discloses a processing flow of transaction data. Wallet A (terminal device A) performs a Hash operation on transaction data on the REE side to generate a transaction digest, and sends it to the TA on the TEE side. The TA on the TEE side uses the private key of wallet A to encrypt the transaction digest to generate a digital signature (or signature data), and returns the signature data and the public key of wallet A to the CA on the REE side. The CA performs the Hash operation on the transaction data to obtain digest data. The CA decrypts the signature data to obtain the original transaction digest data, compares whether the digest data generated by the Hash operation and the original transaction digest data are identical. If they are identical, it indicates that the transaction data has not been tampered.

"Extracting Event Logs for Process Mining from Data Stored on the Blockchain" (XP 93080115A) discloses an approach for the extraction and transformation to extensible event stream (XES) of process data from the blockchain.

CN 110544095A discloses a transaction processing method for a blockchain network, including: receiving transactions submitted by clients by a sorting node of the blockchain network; generating and verifying transaction timestamps corresponding to the transactions one by one, and when the verification is successful, sorting the received transactions based on the transaction timestamps; constructing the sorted transactions into a new block, and broadcast the new block to an accounting node in the blockchain network; verifying the new block by the accounting node, and when the verification is successful, appending the new block to the end of the blockchain.

CN 110543501A discloses a blockchain based advertisement data ledger method, including: receiving advertisement distribution data sent by an advertisement terminal, wherein the advertisement distribution data includes the number of views; after verifying the advertisement distribution data, recording it in the blockchain.

CN 110400164A discloses a data determination method, including: obtaining operation data generated by executing operations on target resources deployed on a data deployment platform; encrypting the operation data by using a key matching a first encryption algorithm to obtain the first encrypted operation data; sending the first encrypted operation data to the data deployment platform, and obtaining a second encrypted operation data and a first target data returned by the data deployment platform; decrypting the second encrypted operation data to obtain a second target data; obtaining an intersection set between the first target data and the second target data; determining a resource conversion rate matching the target resources based on the intersection set.

CN 111226249A discloses a blockchain based trusted platform. Participant A generates the hash value of a message and encrypts it with its private key to provide a digital signature for the encrypted hash value. Participant A attaches the digital signature to the message and sends the message with the digital signature to Participant B. Participant B decrypts the digital signature by using the public key of participant A to obtain the hash value. Participant B hashes the message and compares the two hash values. If the two hash values are the same, participant B can confirm that the message is indeed from participant A and has not been tampered with.

### SUMMARY

Embodiments of this application provide a data processing method and apparatus, a device, and a computer-readable storage medium, to better ensure that data is trustworthy.

An embodiment of this application provides a data processing method, including:
obtaining data that need to be verified from a target computing node;
obtaining first ledger data corresponding to the data that need to be verified from an accessed blockchain network, the first ledger data being obtained by signing a first message digest by using a private key of the target computing node and being stored in the blockchain network by the target computing node, and the first message digest being obtained by performing message digest calculation on raw data corresponding to the data that need to be verified;
decrypting the first ledger data by using a public key of the target computing node to obtain the first message digest; performing message digest calculation on the data that need to be verified to obtain a second message digest; and
determining a verification result of the data that need to be verified according to the first message digest and the second message digest
sending remote proof information corresponding to the first computing node and a public key of the first computing node to the blockchain network to obtain a certificate corresponding to the first computing node from the blockchain network, the certificate being generated and sent after the blockchain network verifies the remote proof information; and
after determining the verification result of the data that need to be verified according to the first message digest and the second message digest, the method further comprises:
   signing the verification result by using a public key corresponding to a second computing node to obtain verification result signature data, the second computing node being a computing node that needs to view the verification result; and
   sending a request message carrying the verification result signature data to the blockchain network through the first computing node,
   the request message further carrying a certificate corresponding to the first computing node, and being used for instructing that the verification result signature data is stored in the blockchain network after verifying the certificate; or the request message being used for instructing that the verification result signature data is stored in the blockchain network according to an identifier of the first computing node, and the identifier being stored in the blockchain network after verifying the remote proof information.

Correspondingly, an embodiment of this application provides an intelligent device, including a processor, a memory, and a communication interface, the processor, the memory, and the communication interface being connected to one another, the memory being configured to store a computer program, the computer program including program instructions, and the processor being configured to invoke the program instructions to perform the data processing method described above.

Correspondingly, an embodiment of this application provides a computer-readable storage medium for storing a computer program, which when executed by a processor, causes the processor to perform the data processing method described above.

### BRIEF DESCRIPTION OF THE DRAWINGS

To describe the technical solutions in the embodiments of the present disclosure or in the existing technologies more clearly, the following briefly describes the accompanying drawings required for describing the embodiments or the existing technologies. Apparently, the accompanying drawings in the following description show only some embodiments of the present disclosure, and a person of ordinary skill in the art may still derive other drawings from these accompanying drawings without creative efforts.
FIG. 1A is a scenario architecture diagram of data processing according to an embodiment of this application.
FIG. 1B is another scenario architecture diagram of data processing according to an embodiment of this application.
FIG. 2A is a flowchart of a data processing method according to an embodiment of this application.
FIG. 2B is a flowchart of another data processing method according to an embodiment of this application.
FIG. 3A is a flowchart of still another data processing method according to an embodiment of this application.
FIG. 3B is a flowchart of processing a message digest according to an embodiment of this application.
FIG. 3C is another flowchart of processing a message digest according to an embodiment of this application.
FIG. 4A is a schematic diagram of establishing a connection between a blockchain and an off-chain trusted computing node according to an embodiment of this application.
FIG. 4B is a schematic diagram of real-time communication between off-chain data and a blockchain according to an embodiment of this application.
FIG. 4C is a schematic diagram showing that off-chain data cannot communicate with a blockchain in real time according to an embodiment of this application.
FIG. 5A is a schematic structural diagram of a data processing apparatus according to an embodiment of this application.
FIG. 5B is a schematic structural diagram of another data processing apparatus according to an embodiment of this application.
FIG. 6 is a schematic structural diagram of an intelligent device according to an embodiment of this application.

### DESCRIPTION OF EMBODIMENTS

The following clearly and completely describes the technical solutions in the embodiments of the present disclosure with reference to the accompanying drawings in the embodiments of the present disclosure.

The embodiments of this application involve a blockchain, a blockchain network, and a trusted computing node. The blockchain is a chain data structure that combines data blocks in sequence in chronological order and a distributed ledger that cryptographically ensures that data is untamperable and unforgeable. The blockchain is essentially a decentralized database and a series of associated data blocks generated by using a cryptographic method. Each data block includes information about a batch of network transactions for verifying the validity of the information (for anti-counterfeiting) and generating a next block. The blockchain may include a blockchain underlying platform, a platform product service layer, and application service layer. In a process of depositing a certificate, the trusted computing node may store, in the blockchain, ledger data obtained after processing raw data.

The blockchain underlying platform may include user management, basic service, smart contract, and other processing modules. The user management module is responsible for management of identity information of all blockchain participants, including maintenance of public and private key generation (account management), key management, maintenance of a correspondence between real identities and blockchain addresses of users (rights management), and the like, supervising and auditing, under authorization, transaction statuses of some real identities, and providing rule configuration for risk control (risk control audit). The basic service module is deployed on all blockchain node devices, and configured to verify validity of a service request and record a valid request to a storage after completing consensus. For a new service request, the basic service module first parses and authenticates interface adaptation (interface adaptation), then encrypts service information by using a consensus algorithm (consensus management), transmits the encrypted service information to a shared ledger completely and consistently (network communication), and records and stores the encrypted service information. The smart contract module is responsible for contract registration and issuance, contract triggering, and contract execution. A developer may define contract logic through a particular programming language, publish the contract logic on the blockchain (contract registration), and invoke, according to logic of contract terms, a key or another event to trigger execution to complete the contract logic. In the embodiments of this application, after receiving a contract invocation request, the blockchain network may invoke corresponding data according to content of the contract, and send the data to a sender of the contract invocation request, or store data provided by a sender of the contract invocation request into the blockchain network.

In the embodiments of this application, when data needs to be disclosed, a node in the blockchain network may perform verification on the data that needs to be disclosed to ensure trustworthiness of the data. The blockchain network is a distributed application architecture that distributes tasks and workloads among peers and is a form of networking or a network formed by a peer-to-peer computing model in an application layer. The blockchain network includes a plurality of interconnected computers. These computers are also referred to as node devices of the blockchain network. In a blockchain network environment, the plurality of interconnected computers are in a peer-to-peer position. The computers have the same function, and there is no master-slave distinction. A computer can be used as a server to set shared resources for use by other computers in the network; or may be used as a workstation. The entire network does not rely on a dedicated centralized server, and there is no dedicated workstation. Each computer in the network can both serve as a requester of a network service, and respond to a request from another computer to provide a resource, a service, and content.

The trusted computing (TC) node is a node device that includes a trusted computing environment (or Trusted Execution Environment (TEE)) and a Rich Execution Environment (REE) on a terminal device. The TEE includes trusted hardware and software resources such as a processor, a secure storage, a trusted user interface (TUI), a trusted operating system (TOS), and a trusted application (TA) on the terminal device to construct a more secure operating environment than the REE. To ensure security of TEE resources, resources accessible to the REE are also accessible to the TEE, but conversely, trusted resources on the TEE are accessible only to other trusted resources unless there is an explicit authorization from the TEE. The TEE generates a public-private key pair through asymmetric encryption, and writes a private key into a chip during manufacturing of the chip, so that a file encrypted by using a public key corresponding to the chip can be decrypted only in the chip to obtain information in the file. A private key in each chip is unique and untamperable. In this way, in this operating environment isolated from the REE, personal information of users can be stored and processed more securely and operations that require high confidentiality such as electronic payments can be performed. In the embodiments of this application, data is processed in the trusted computing environment of the computing node to ensure trustworthiness of a data processing result.

The embodiments of this application design a mechanism for intercommunication with the blockchain network for off-chain data outside the blockchain network, which can provide a proof of reliability for the off-chain data, allowing the off-chain data to interact with on-chain information. In some scenarios in which the off-chain data is private data, it is possible to not leak the off-chain data during on-chain and off-chain interactions. When data is generated, the trusted computing environment signs the data and stores the signature on the blockchain network, and raw data is still stored in a privacy protection environment. When needing to interact with the off-chain data, the blockchain network may interact with the trusted computing environment, and verify and process the off-chain data by using the trusted computing environment, and publicize a result on the chain after authentication. This design provides a reliable way for the blockchain network to access data while the data does not go out of the domain, and ensures both reliability of the private data involved in the interaction and reliability of logic used for processing the data off-chain.

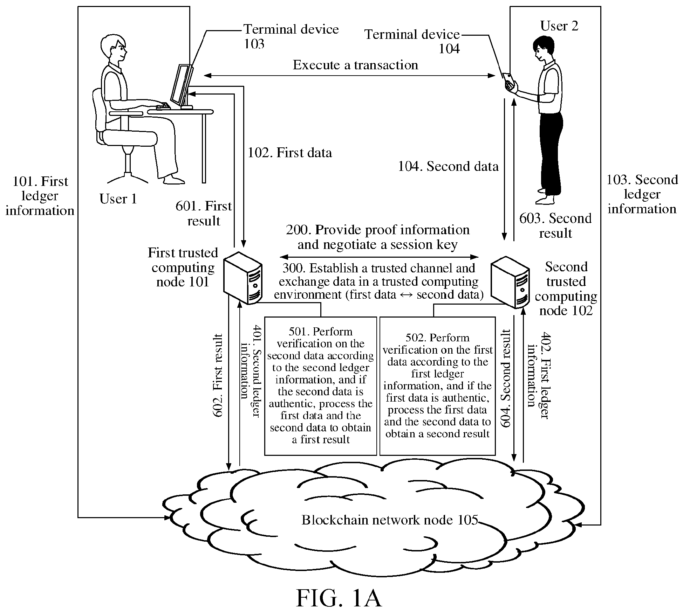

Referring to FIG. 1A, FIG. 1A is a scenario architecture diagram of data processing according to an embodiment of this application. As shown in FIG. 1A, the scenario architecture diagram includes a trusted computing node 101, a trusted computing node 102, a terminal device 103, a terminal device 104, and a blockchain network node 105. The terminal device 103 and the terminal device 104 are devices used by users. The first trusted computing node 101 is a special-purpose device in a trusted computing environment, or the first trusted computing node 101 and the terminal device 103 may alternatively be the same device that can achieve trusted computing. Similarly, the second trusted computing node 102 may also be a special-purpose device in the trusted computing environment, or the second trusted computing node 102 and the terminal device 104 may alternatively be the same device that can achieve trusted computing. The trusted computing node 101, the trusted computing node 102, the terminal device 103, and the terminal device 104 may include, but are not limited to: smartphones (such as Android phones or iOS phones), tablet computers, portable personal computers, mobile Internet devices (MIDs), and other devices. This is not limited in the embodiments of this application. The first trusted computing node 101 and the second trusted computing node 102 each may alternatively be an independent physical server, or a server cluster including a plurality of physical servers, or a distributed system. The blockchain network node 105 is a node device in a blockchain network. The blockchain network node 105 may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a security service, a content delivery network (CDN), big data, and an artificial intelligence platform. The trusted computing node 101, the trusted computing node 102, the terminal device 103, the terminal device 104, and the blockchain network node 105 may be connected directly or indirectly in a wired or wireless communication manner. This is not limited herein in this application.

In the scenario of data processing shown in FIG. 1A, a data processing procedure mainly includes that a user 1 and a user 2 execute a transaction. In step 101, the user 1 uploads first ledger information to the blockchain network (for example, sends the first ledger information to the blockchain network node 105) through the terminal device 103, the first ledger information being obtained by signing a message digest of first data by using a private key corresponding to the terminal device 103. In step 102, the terminal device 103 stores the first data in the first trusted computing node 101. In an embodiment, the terminal device 103 first stores the first data in the first trusted computing node 101. The first trusted computing node 101 signs the message digest of the first data by using a private key corresponding to the first trusted computing node 101 to obtain the first ledger information, and uploads the first ledger information and a certificate of the first trusted computing node 101 to the blockchain network. The certificate of the first trusted computing node 101 is used for proving that the first trusted computing node 101 is a trusted computing node. Similarly, in step 103, the user 2 uploads second ledger information to the blockchain network through the terminal device 104, the second ledger information being obtained by signing a message digest of second data by using a private key corresponding to the terminal device 104. In step 104, the terminal device 104 stores the second data in the second trusted computing node 102. In an embodiment, the terminal device 104 first stores the second data in the second trusted computing node 102. The second trusted computing node 102 signs the message digest of the second data by using a private key corresponding to the second trusted computing node 102 to obtain second ledger information, and uploads the second ledger information and a certificate of the second trusted computing node 102 to the blockchain network. The certificate of the second trusted computing node 102 is used for proving that the second trusted computing node 102 is a trusted computing node. In step 200, the first trusted computing node 101 and the second trusted computing node 102 check remote proofs of each other, and negotiate a session key (for example, encryption with an asymmetric key or a symmetric key) after the check is passed. In step 300, the first trusted computing node 101 encrypts the first data by using the negotiated key, and sends the encrypted first data to the second trusted computing node 102. Similarly, the second trusted computing node 102 encrypts the second data by using the negotiated key, and sends the encrypted second data to the first trusted computing node 101.

In step 401, the first trusted computing node 101 decrypts the encrypted second data by using the negotiated key to obtain the second data, and obtains the second ledger information corresponding to the second data from the blockchain network. In step 402, the second trusted computing node 102 decrypts the encrypted first data by using the negotiated key to obtain the first data, and obtains the first ledger information corresponding to the first data from the blockchain network. In step 501, the first trusted computing node 101 performs verification on the second data according to the second ledger information (decrypts the second ledger information by using a public key corresponding to the second trusted computing node 102 to obtain the message digest of the second data, calculates message digest verification information by using the second data, verifies whether the message digest verification information matches the message digest of the second data, and obtains a verification result), and if the second data is authentic, processes the first data and the second data (for example, calculates an intersection set or a conversion rate) to obtain a first result. In step 502, the second trusted computing node 102 performs verification on the first data according to the first ledger information, and if the first data is authentic, processes the first data and the second data to obtain a second result.

In step 601, the first trusted computing node 101 transfers the first result to the terminal device 103, so that the terminal device 103 presents the first result to the user 1. In step 602, the first trusted computing node 101 encrypts the first result by using the public key corresponding to the second trusted computing node 102, and uploads the encrypted first result and the certificate of the first trusted computing node 101 to the blockchain network, the certificate of the first trusted computing node 101 being used for proving that the first trusted computing node 101 is a trusted computing node. Correspondingly, in step 603, the second trusted computing node 102 transfers the second result to the terminal device 104, so that the terminal device 104 presents the second result to the user 2. In step 604, the second trusted computing node 102 encrypts the second result by using a public key corresponding to the first trusted computing node 101, and uploads the encrypted second result and the certificate of the second trusted computing node 102 to the blockchain network, the certificate of the second trusted computing node 102 being used for proving that the second trusted computing node 102 is a trusted computing node. The foregoing process is used as an example only. The first trusted computing node 101 and the second trusted computing node 102 may perform one or more of step 601 to step 604 according to specific situations.

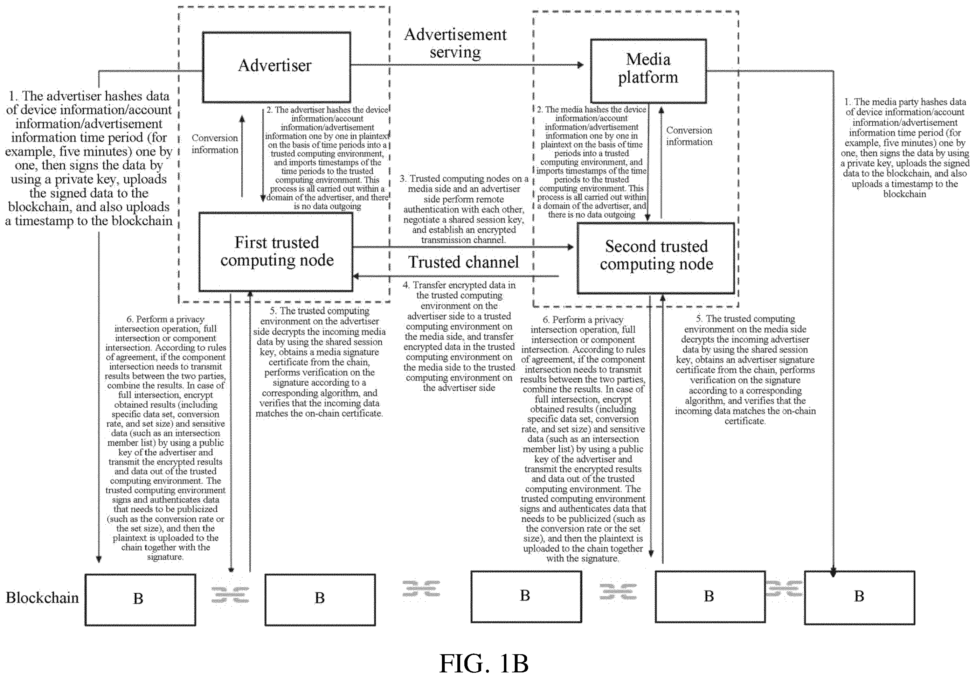

The data processing procedure of this embodiment is described below by using an example. For this example, refer to FIG. 1A and FIG. 1B. It is assumed that the terminal device 103 is a terminal device used by an advertiser, the terminal device 104 is a terminal device used by a media platform, and the executed transaction specifically means that the advertiser serves an advertisement on the media platform, so that the media platform pushes the advertisement to users. After detecting that the user A performs an operation on the served advertisement (such as clicking on the advertisement or purchasing a commodity in the advertisement), the advertiser signs a message digest of advertisement-associated data (where the advertisement-associated data includes an object identifier, an advertisement viewing time, a transaction amount, or the like of the user A) of the user A by using a private key corresponding to the advertiser (the terminal device 103 or the first trusted computing node 101) to obtain first ledger information, and uploads the first ledger information to the blockchain network. Similarly, after pushing advertisement information to the user B, the media platform signs a message digest of advertisement-associated data corresponding to the user B by using a private key corresponding to the media platform (the terminal device 104 or the second trusted computing node 102) to obtain second ledger information, and uploads the second ledger information to the blockchain network. When needing to account for the advertisement information, the advertiser and the media platform check remote proofs of each other, and negotiate a session key after the check is passed. The first trusted computing node 101 corresponding to the advertiser encrypts a first advertisement-associated data set by using the negotiated key, and sends the encrypted first advertisement-associated data set to the second trusted computing node 102 corresponding to the media platform, user advertisement-associated data included in the first advertisement-associated data set being advertisement-associated data of a user that performs an operation on the served advertisement within a preset time period. Similarly, the second trusted computing node 102 corresponding to the media platform encrypts a second advertisement-associated data set by using the negotiated key, and sends the encrypted second advertisement-associated data set to the first trusted computing node 101 corresponding to the advertiser, user advertisement-associated data included in the second advertisement-associated data set being advertisement-associated data of a user to whom the media platform has pushed the advertisement information within the preset time period. In an embodiment, the two parties may not need to determine the session key through negotiation. During data transmission between the first trusted computing node 101 and the second trusted computing node 102, the two parties only need to encrypt data by using the public keys of each other, and the first trusted computing node 101 or the second trusted computing node 102 decrypts the encrypted data by using the private key thereof.

The first trusted computing node 101 decrypts the encrypted second advertisement-associated data set by using the negotiated key to obtain the second advertisement-associated data set, obtains one or more pieces of ledger information corresponding to the second advertisement-associated data set from the blockchain network, and performs verification on the second advertisement-associated data set according to the obtain ledger information. If a verification result indicates that the second advertisement-associated data set is authentic, the first trusted computing node 101 performs an intersection set operation on the first advertisement-associated data set and the second advertisement-associated data set to obtain a third advertisement-associated data set. A click through rate can be calculated based on a quantity of user object identifiers included in the second advertisement-associated data set and a quantity of user object identifiers included in the third advertisement-associated data set. A proportion of active users of media platform promotion can be calculated based on a quantity of user object identifiers included in the first advertisement-associated data set and the quantity of user object identifiers included in the third advertisement-associated data set. An active user is a user that performs an operation (such as clicking or executing a transaction) on the served advertisement. An object identifier of a user whose transaction amount is greater than a preset amount among users for which promotion is performed by the media platform can be sifted out based on a transaction amount of each piece of associated data in the third advertisement-associated data set. An object identifier of a user whose advertisement viewing time is greater than a preset time among users for which promotion is performed by the media platform can be sifted out based on an advertisement viewing time of each piece of associated data in the third advertisement-associated data set. Similarly, the second trusted computing node 102 decrypts the encrypted first advertisement-associated data set by using the negotiated key to obtain the first advertisement-associated data set, obtains one or more pieces of ledger information corresponding to the first advertisement-associated data set from the blockchain network, and performs verification on the first advertisement-associated data set according to the obtained ledger information. If a verification result indicates that the first advertisement-associated data set is authentic, the second trusted computing node 102 may process the third advertisement-associated data set obtained by performing the intersection set operation on the first advertisement-associated data set and the second advertisement-associated data set. For a processing manner, refer to the processing manner of the first trusted computing node 101.

In this embodiment, after generating confidential data (for example, the user advertisement-associated data), the first trusted computing node generates a message digest of the confidential data, signs the message digest by using the private key of the first trusted computing node to obtain ledger data (for example, the first ledger information), and uploads the ledger data to the blockchain network. After obtaining the confidential data, the second trusted computing node may perform, by using the ledger data in the blockchain network, verification on the confidential data sent by the first trusted computing node, to ensure that the confidential data is trustworthy.

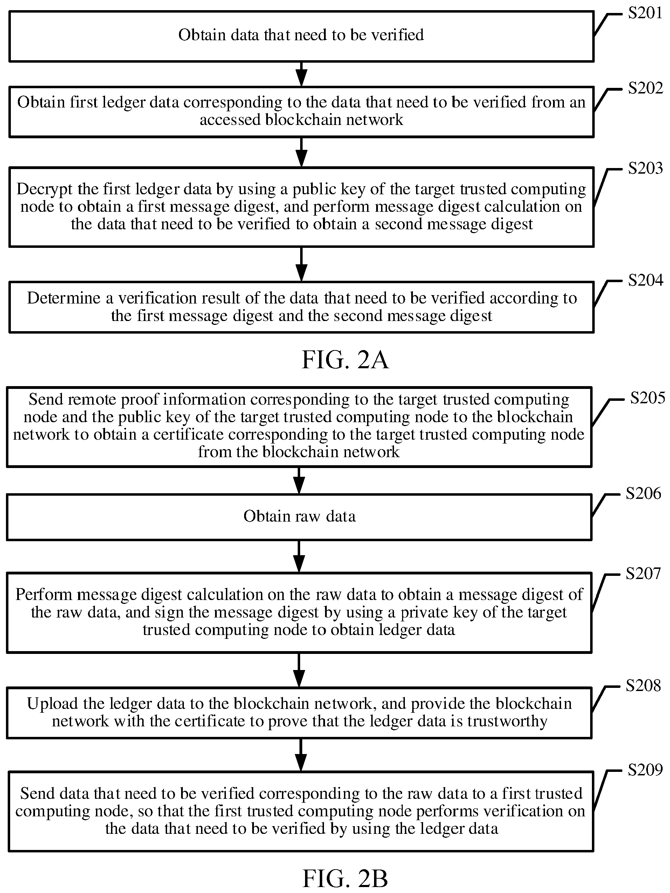

Referring to FIG. 2A, FIG. 2A is a flowchart of a data processing method according to an embodiment of this application. The method may be performed by an intelligent device. The intelligent device may be specifically the first trusted computing node 101 or the second trusted computing node 102 shown in FIG. 1A. The method in this embodiment may include the following steps.

S201: Obtain data that need to be verified. The data that need to be verified is confidential data that is not disclosed, for example, advertisement promotion data within a time period. In one embodiment, the intelligent device may obtain the data that need to be verified through another trusted computing node that communicates therewith. In another embodiment, the intelligent device may obtain encrypted data corresponding to the data that need to be verified through another trusted computing node that communicates therewith. The encrypted data is obtained by encrypting the data that need to be verified by using a public key corresponding to the intelligent device. The intelligent device decrypts the encrypted data by using a private key thereof to obtain the data that need to be verified. The data that need to be verified may be sent by a target trusted computing node. When the intelligent device is the first trusted computing node 101 shown in FIG. 1A, the target trusted computing node is the second trusted computing node 102, and vice versa.

S202: Obtain first ledger data corresponding to the data that need to be verified from an accessed blockchain network. The first ledger data is obtained by signing a first message digest by using a private key corresponding to the target trusted computing node used for storing ledger data into a blockchain network. That is, the first ledger data is obtained by signing a first message digest by using a private key of the target trusted computing node and is stored in the blockchain network by the target trusted computing node. The target trusted computing node may be the intelligent device, or may be a trusted computing node other than the intelligent device. The first message digest is obtained by the target trusted computing node after performing message digest calculation (for example, hash calculation) on raw data corresponding to the data that need to be verified. It can be understood that, if the raw data is not tampered with after generation, the data that need to be verified is the same as the raw data.

In one embodiment, after generating the raw data, the target trusted computing node performs message digest calculation on the raw data to obtain the first message digest, and signs the first message digest by using the private key of the target trusted computing node to obtain the first ledger data. The target trusted computing node uploads the first ledger data and a certificate of the target trusted computing node to the blockchain network. The certificate of the target trusted computing node is used for proving that the target trusted computing node is a trusted computing node. The trusted computing node cannot derive the raw data from the first message digest, that is, a node in the blockchain network cannot obtain the raw data from the first ledger data. The message digest calculation may be, for example, calculation performed based on a hash algorithm, and an obtained hash value is used as a message digest of the corresponding raw data. In other embodiments, the message digest calculation may alternatively be based on other families of algorithms such as a message digest (MD) algorithm, secure hash algorithms (SHAs), and a message authentication code (MAC) algorithm.

S203: Decrypt the first ledger data by using a public key of the target trusted computing node to obtain a first message digest, and perform message digest calculation on the data that need to be verified to obtain a second message digest. The first message digest and the second message digest are obtained by performing digest calculation by using the same message digest algorithm. For example, the first message digest is obtained after performing digest calculation on the raw data by using a hash algorithm 1, and the second message digest is obtained after performing digest calculation on the data that need to be verified by using the hash algorithm 1.

S204: Determine a verification result of the data that need to be verified according to the first message digest and the second message digest. In one embodiment, if the first message digest matches the second message digest, the intelligent device determines that the data that need to be verified is not tampered with (that is, the verification result indicates that the data that need to be verified is trustworthy). If the first message digest does not match the second message digest, the intelligent device determines that the data that need to be verified is tampered with (that is, the verification result indicates that the data that need to be verified is not trustworthy). In an embodiment, for example, that digests match may mean that the first message digest and the second message digest are the same. In other embodiments, whether the first message digest matches the second message digest may alternatively be determined in other message digest matching determining manners.

When the intelligent device is specifically the first trusted computing node 101, after step S204, the method may further include: in response to that the verification result indicates that the data that need to be verified is authentic, processing the data that need to be verified and first data stored in the first trusted computing node to obtain a first result, and sending the first result to a terminal device associated with the first trusted computing node, where the processing the data that need to be verified and first data stored in the first trusted computing node includes intersection set calculation processing or conversion rate calculation processing.

In an embodiment, the data that need to be verified is encrypted data obtained by the target trusted computing node by encrypting the raw data by using a target key. When the intelligent device is specifically the first trusted computing node 101, step S201 may specifically include: receiving, from the target trusted computing node, a first slice of the target key that is encrypted by using the public key corresponding to the first trusted computing node, and decrypting the encrypted first slice of the target key by using the private key corresponding to the first trusted computing node to obtain the first slice of the target key; encrypting the first slice of the target key by using a public key of a third trusted computing node, and sending the encrypted first slice to the third trusted computing node; receiving, from the third trusted computing node, a second slice of the target key by using the public key corresponding to the first trusted computing node, and decrypting the encrypted second slice of the target key by using the private key corresponding to the first trusted computing node to obtain the second slice of the target key; obtaining the target key based on the first slice of the target key and the second slice of the target key; and decrypting the encrypted data by using the target key to obtain the data that need to be verified.

FIG. 2B is a flowchart of another data processing method according to an embodiment of this application. Corresponding to the method depicted in FIG. 2A, the method may be performed by the target trusted computing node. Description is provided by using an example in which the method depicted in FIG. 2A is performed by the first trusted computing node, and the target trusted computing node in FIG. 2B is the second trusted computing node.

As shown in FIG. 2B, the data processing method includes the following steps:
Step S205. Send remote proof information corresponding to the target trusted computing node and the public key of the target trusted computing node to the blockchain network to obtain a certificate corresponding to the target trusted computing node from the blockchain network.
Step S206. Obtain raw data.
Step S207. Perform message digest calculation on the raw data to obtain a message digest of the raw data, and sign the message digest by using a private key of the target trusted computing node to obtain ledger data.
Step S208. Upload the ledger data to the blockchain network, and provide the blockchain network with the certificate to prove that the ledger data is trustworthy.
Step S209. Send data that need to be verified corresponding to the raw data to a first trusted computing node, so that the first trusted computing node performs verification on the data that need to be verified by using the ledger data.

In one embodiment, the raw data is service data. Therefore, the service data is obtained in step S206. In step S207, message digest calculation is performed on the service data to obtain a message digest corresponding to the service data. The message digest corresponding to the service data is added to a message digest set, the message digest set being used for storing message digests generated within a preset time period, and the message digest set recording at least two message digests. In response to detecting that the message digest set satisfies an on-chain condition, a message digest recorded in the message digest set is signed by using the private key corresponding to the target trusted computing node to obtain ledger data corresponding to the message digest set or ledger data. In step S208, the obtained ledger data corresponding to the message digest set is uploaded to the blockchain network for blockchain on-chain processing. On-chain means uploading (to the blockchain).

In one embodiment, the data that need to be verified is sent to N trusted computing nodes including the first trusted computing node, N being a positive integer. Step S209 includes: encrypting the raw data by using a target key to obtain encrypted data; and dividing the target key into N slices, encrypting a slice of a target key corresponding to each of the N trusted computing nodes by using a public key of the each trusted computing node, and sending, to the each trusted computing node, the encrypted data and the encrypted slice of the key that corresponds to the trusted computing node.

In this embodiment, after generating the confidential data, the target trusted computing node generates a message digest of confidential data, signs the message digest by using the private key of the target trusted computing node to obtain the ledger data, and uploads the ledger data to the blockchain network. After obtaining the confidential data, the intelligent device may perform, by using the ledger data in the blockchain network, verification on the confidential data sent by the target trusted computing node to ensure that the confidential data is trustworthy. In addition, the raw data is transmitted and processed between two trusted computing nodes, thereby ensuring that the data is not easily leaked and improving security of the data.

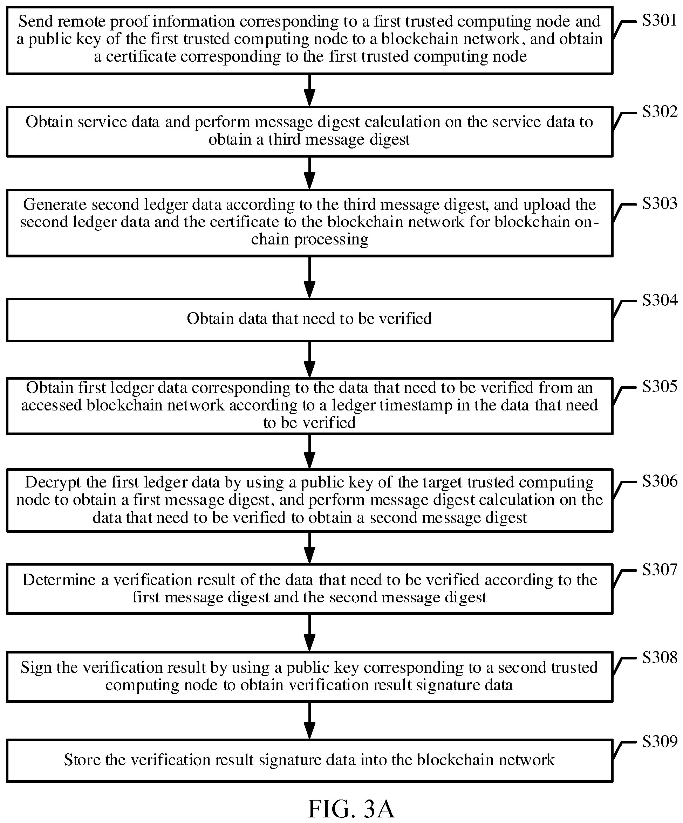

Referring to FIG. 3A, FIG. 3A is a flowchart of another data processing method according to an embodiment of this application. The method may be performed by an intelligent device. The intelligent device may be specifically the first trusted computing node 101 shown in FIG. 1A. The method in this embodiment includes the following steps.

S301: Send remote proof information corresponding to the first trusted computing node and a public key of the first trusted computing node to the blockchain network, and obtain a certificate corresponding to the first trusted computing node from the blockchain network. A remote proof mechanism generates a proof through hardware to declare a current operating environment of the intelligent device. The intelligent device may send the proof to a blockchain network node to indicate that the intelligent device is not tampered with. The blockchain network node may determine transmission and processing logic of messages in the intelligent device according to the proof, and screen out an intelligent device or a trusted computing node that has risks of leakage and insecurity in the transmission or processing links, thereby avoiding a risk of information leakage in intelligent devices.

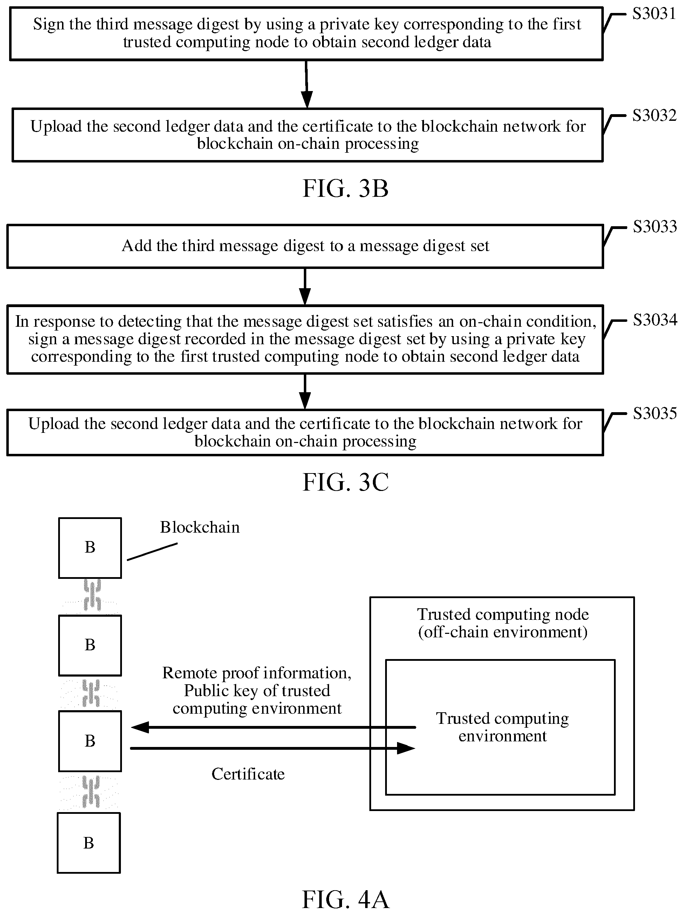

FIG. 4A is a schematic diagram of establishing a connection between a blockchain and an off-chain trusted computing node according to an embodiment of this application. As shown in FIG. 4A, the trusted computing node provides remote proof information and a public key of the trusted computing node (a trusted computing environment) to the blockchain for verification. After the remote proof information corresponding to the trusted computing node is authentic, the blockchain network node allocates a corresponding certificate to the trusted computing node to prove that an operating environment in the trusted computing node is trustworthy (that is, there is no risk of tampering or data leakage, and the transmission and processing environment is secure). The intelligent device obtains the certificate corresponding to the first trusted computing node sent by the blockchain network node.

S302: Obtain service data and perform message digest calculation on the service data to obtain a third message digest. The service data is one type of the raw data. The service data refers to data that needs to be kept confidential and that is generated by the intelligent device during service processing, such as advertisement promotion data, customer transaction data, or an account statement.

S303: Generate second ledger data according to the third message digest, and upload the second ledger data and the certificate to the blockchain network for blockchain on-chain processing. When a frequency of message digest generation is less than a frequency threshold, the intelligent device may upload message digests to the blockchain network one by one (that is, each message digest corresponds to one piece of ledger data) for depositing certificates. When the frequency of message digest generation is greater than or equal to the frequency threshold, the intelligent device may upload the message digests to the blockchain network in batches (that is, at least two message digests correspond to one piece of ledger data) for depositing certificates.

FIG. 3B is a flowchart of processing a message digest according to an embodiment of this application. As shown in FIG. 3B, in one embodiment: S3031: Sign the third message digest by using a private key corresponding to the first trusted computing node to obtain second ledger data. A specific implementation of step S3031 is similar to step S202 of FIG. 2A in which the intelligent device signs the first message digest by using the private key corresponding to the first trusted computing node to obtain first ledger data. Details are not described herein again. S3032: Upload the second ledger data and the certificate to the blockchain network for blockchain on-chain processing. During on-chain processing of the second ledger data, the intelligent device provides the certificate for the blockchain network node to prove that the second ledger data is trustworthy. After determining that the certificate is correct, the blockchain network node stores the second ledger data into the blockchain network. It can be learned that the message digests of the service data can be on-chain one by one by performing step S3031 and step S3032.

FIG. 3C is another flowchart of processing a message digest according to an embodiment of this application. As shown in FIG. 3C, in one embodiment: S3033: Add the third message digest to a message digest set. The message digest set is used for storing message digests generated within a preset time period, and the message digest set records at least two message digests. S3034: In response to detecting that the message digest set satisfies an on-chain condition, sign a message digest recorded in the message digest set by using a private key corresponding to the first trusted computing node to obtain second ledger data. The on-chain condition includes: a current time reaches a preset time and the message digest set records at least two message digests; or a quantity of message digests in the message digest set reaches a threshold. S3035: Upload the second ledger data and the certificate to the blockchain network for blockchain on-chain processing. For a specific implementation of step S3035, refer to step S3032. Details are not described herein again. It can be learned that service data can be uploaded to the blockchain network in batches by performing steps S3033 to S3035.

S304: Obtain data that need to be verified. In one embodiment, the data that need to be verified is carried in encrypted data. The encrypted data is obtained by encrypting the data that need to be verified by using the public key of the first trusted computing node. Therefore, the data that need to be verified can be obtained by decrypting the encrypted data by using the private key of the first trusted computing node. For example, during transmission of data that need to be verified to each other, the advertiser and the media platform encrypt their own data that need to be verified by using a public key corresponding to a trusted computing node at a peer end, generate their own encrypted data, and send the encrypted data to the peer end. After obtaining the encrypted data of the peer end, the advertiser and the media platform decrypt the encrypted data of the peer end by using private keys corresponding to their own trusted computing nodes to obtain the data that need to be verified of the peer end.

In another embodiment, a sending node of data that need to be verified needs to send the data that need to be verified to N trusted computing nodes. The intelligent device is a j^{th} trusted computing node in the N trusted computing nodes, j and N being positive integers, N being greater than or equal to 2, and j being less than or equal to N. The sending node of the data that need to be verified encrypts the service data by using a target key to obtain encrypted data, divides the target key into N slices, encrypts a corresponding slice of the target key by using a public key of each trusted computing node (for example, encrypts a slice of an i^{th} target key by using a public key of an i^{th} trusted computing node to obtain an i^{th} encrypted key slice, i being a positive integer and i being less than or equal to N), and sends, to the each trusted computing node, an encrypted key slice corresponding to the trusted computing node and encrypted data (for example, sends the i^{th} encrypted key slice and the encrypted data to the i^{th} trusted computing node).

Correspondingly, after receiving a j^{th} encrypted key slice, the intelligent device decrypts the j^{th} encrypted key slice by using the private key corresponding to the first trusted computing node to obtain an j^{th} key slice. Then, the intelligent device encrypts the j^{th} key slice by using public keys of N-1 trusted computing nodes other than the intelligent device, respectively, sends the encrypted key slices to the corresponding N-1 trusted computing nodes, and obtains an encrypted key slice that is sent by each of the N-1 trusted computing nodes and that is encrypted by using the public key of the first trusted computing node. For example, the first trusted computing node encrypts the j^{th} key slice by using a public key of a k^{th} trusted computing node, sends the encrypted j^{th} key slice to the k^{th} trusted computing node, and obtains a target encrypted key slice sent by the k^{th} trusted computing node. The target encrypted key slice is obtained by the k^{th} trusted computing node by encrypting a k^{th} key slice by using a public key of the j^{th} trusted computing node. Subsequently, the intelligent device decrypts, by using the private key corresponding to the first trusted computing node, the obtained encrypted key slice sent by the each trusted computing node to obtain all key slices of the target key to obtain the target key. Then, the intelligent device decrypts, by using the target key, the encrypted data sent by the sending node of the data that need to be verified to obtain the data that need to be verified. In this embodiment, the data that need to be verified is encrypted/decrypted by using a symmetric key. When a plurality of trusted computing nodes communicate or there is a large amount of data that need to be verified, use of the method can improve efficiency of data processing. In still another embodiment, the intelligent device may be a sending node of the data that need to be verified.

S305: Obtain first ledger data corresponding to the data that need to be verified from an accessed blockchain network according to a ledger timestamp in the data that need to be verified. The ledger timestamp is an on-chain time of the raw data corresponding to the data that need to be verified. In one embodiment, ledger data corresponding to the raw data is on-chain one by one (that is, on-chain in the manner of step S302 to step S304). The intelligent device obtains the first ledger data corresponding to the data that need to be verified from the accessed blockchain network according to the ledger timestamp. For example, it is assumed that the ledger timestamp is: 2020-07-08, 12:50:43, and a timestamp of ledger data 1 recorded in the blockchain is: 2020-07-08, 12:50:43, and a timestamp of ledger data 2 is: 2020-06-18, 13:43:28. In this case, the intelligent device obtains the ledger data 1 corresponding to the data that need to be verified from the accessed blockchain network according to the ledger timestamp.

In another embodiment, ledger data corresponding to the raw data is packaged from a plurality of pieces and then simultaneously on-chain. The intelligent device obtains a ledger data set corresponding to the data that need to be verified from the accessed blockchain network according to the ledger timestamp, and obtains the first ledger data corresponding to the data that need to be verified from the ledger data set according to an identifier (such as a transaction serial number or a customer number) of the raw data or the service data.

In still another embodiment, the intelligent device sends a first ledger data obtaining request to the blockchain network, the first ledger data obtaining request being used for triggering the blockchain network to invoke a first smart contract to obtain the first ledger data corresponding to the data that need to be verified. If the blockchain network node finds the first ledger data corresponding to the data that need to be verified, the intelligent device obtains the first ledger data of the blockchain network in response to the first ledger data obtaining request.

In another embodiment, the raw data provided by the first trusted computing node (advertiser) shows that a target user performs X operations (such as clicking or conducting transactions) on advertisement data within a particular time period, X being a positive integer and X being greater than or equal to 2. The first trusted computing node may determine, based on a timestamp of verified advertisement distribution data provided by the media platform, that among the X operations performed by the target user on the advertisement data, Y operations are performed through advertisement data served by the media platform, Y being an integer greater than or equal to 0 and Y being less than or equal to X. For example, the user 1 separately clicks on advertisements at a timestamp 1 to a timestamp 5 during a day, and the media platform serves advertisement data for the user 1 at the timestamp 1, the timestamp 4, and the timestamp 5. Therefore, the advertiser determines that among the advertisement data in the five clicks of the user 1, the advertisement data in three clicks is served by the media platform.

S306: Decrypt the first ledger data by using a public key of the target trusted computing node to obtain a first message digest, and perform message digest calculation on the data that need to be verified to obtain a second message digest. In one embodiment, the first message digest is obtained by the media platform by performing message digest calculation on an object identifier of a served user after the media platform serves an advertisement. The first ledger data is obtained by the media platform by signing the first message digest by using a private key of the media platform. The data that need to be verified is advertisement distribution data within a preset time provided by the media platform for the intelligent device (advertiser). The data that need to be verified includes a first user set. The first user set includes a first user object identifier. The first user object identifier is an object identifier of a user to whom the media platform has pushed advertisement information within the preset time period. The intelligent device decrypts the first ledger data by using a public key of the media platform to obtain a first message digest, and performs message digest calculation on the data that need to be verified to obtain a second message digest.

S307: Determine a verification result of the data that need to be verified according to the first message digest and the second message digest. **In** one embodiment, if the first message digest matches the second message digest, the intelligent device determines that the data that need to be verified is authentic. If the first message digest does not match the second message digest, the intelligent device determines that the data that need to be verified is tampered with.

In an embodiment, when the verification result of S307 indicates that the data that need to be verified is authentic, the intelligent device may further obtain advertisement-associated data corresponding to the data that need to be verified. The advertisement-associated data includes a second user set. The second user set includes a second user object identifier. The second user object identifier is an object identifier of a user that performs an operation (such as clicking, viewing, or executing a transaction) on the served advertisement within the preset time period. The intelligent device performs an intersection set operation on the first user set and the second user set to obtain a third user set. It can be understood that the third user set includes a third user object identifier, and the third user object identifier is an object identifier of a user that performs an operation within the preset time period on the advertisement served by the media platform. The intelligent device determines advertisement promotion information based on the first user set, the second user set, and the third user set. For example, a click through rate can be calculated based on the first user set and the third user set, and a proportion of active users of media platform promotion can be calculated based on the second user set and the third user set.

In an embodiment, in addition to including user sets, the advertisement-associated data may further include advertisement transaction data, such as transaction amounts. In this case, after performing the intersection set operation on the first advertisement-associated data set and the second advertisement-associated data set, the intelligent device can sift out, based on a transaction amount of each piece of associated data in the third advertisement-associated data set, an object identifier of a user whose transaction amount is greater than a preset amount among users for which promotion is performed by the media platform. The advertisement-associated data may further include an advertisement viewing time. In this case, the intelligent device can sift out, based on an advertisement viewing time of each piece of associated data in the third advertisement-associated data set, an object identifier of a user whose advertisement viewing time is greater than a preset time among users for which promotion is performed by the media platform.

S308: Sign the verification result by using a public key corresponding to a second trusted computing node to obtain verification result signature data. The second trusted computing node is a node that needs to view the verification result. In one embodiment, the second trusted computing node is a trusted computing node corresponding to the media platform. In another embodiment, the second trusted computing node is a trusted computing node corresponding to the advertiser.

S309: Store the verification result signature data into the blockchain network. In one embodiment, the intelligent device sends a request message to the blockchain network, the request message carrying the verification result signature data and a certificate of the intelligent device. The certificate is used for proving that the intelligent device is trustworthy. The request message is used for triggering the blockchain network to invoke a second smart contract to store the verification result signature data into the blockchain network. After the certificate of the intelligent device is authentic, the blockchain network node stores the verification result signature data into the blockchain network. In another embodiment, after remote proof information of the intelligent device is authentic, the blockchain network node stores related information of the intelligent device (for example, an identifier of the intelligent device). In this case, the intelligent device sends a request message to the blockchain network, the request message carrying the verification result signature data. The blockchain network node determines, according to related information (such as the identifier of the intelligent device), that the intelligent device is trustworthy, and stores the verification result signature data into the blockchain network. It can be understood that in this implementation, the request message does not need to carry the certificate of the intelligent device. In still another embodiment, the intelligent device directly sends the verification result signature data to the second trusted computing node.

Although step S301 to S309 in the foregoing method are described by using the first trusted computing node as an example, due to the possible similarity between trusted computing nodes, a method similar to the foregoing method is also applicable to another trusted computing node. For example, a method obtained by replacing the first trusted computing node in the steps in the foregoing method with another trusted computing node is applicable to the another trusted computing node.

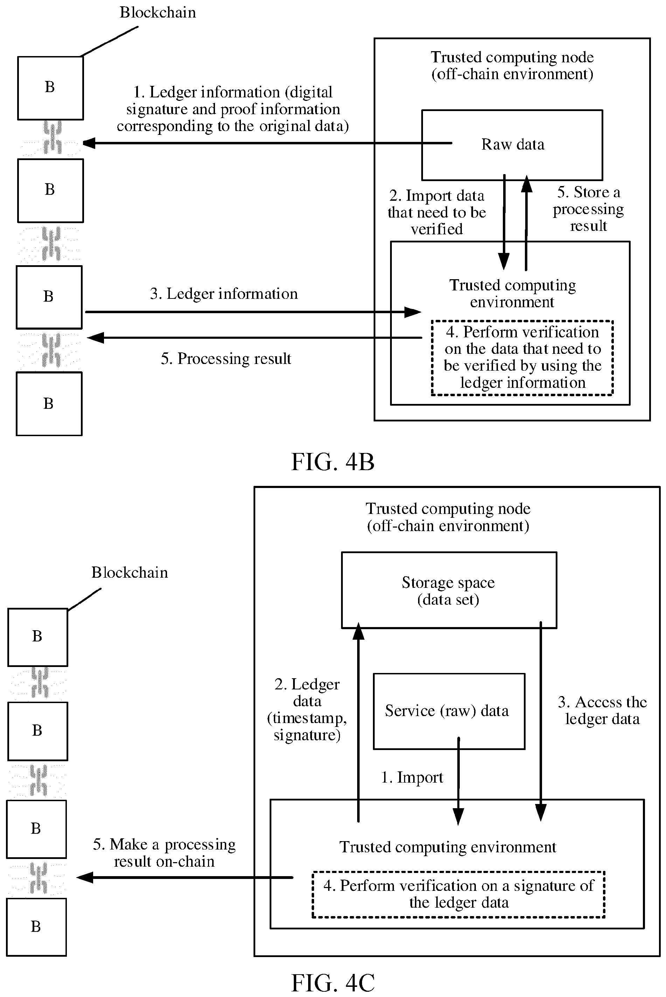

FIG. 4B is a schematic diagram of real-time communication between off-chain data and a blockchain according to an embodiment of this application. As shown in FIG. 4B, because the raw data is private data, the raw data cannot be directly uploaded to the blockchain for depositing a certificate. After a trusted computing node establishes a connection to the blockchain in the manner shown in FIG. 4A, when an off-chain data source generates new raw data, the data is signed by using a private key corresponding to the trusted computing node, a timestamp may be packaged into the signature (digital signature) according to an actual situation, and the digital signature is stored into the blockchain as ledger information. The digital signature does not leak any information about the raw data. When off-chain data needs to be used, the data that need to be verified is transmitted to the trusted computing environment, ledger information corresponding to the raw data is queried from the blockchain, and verification is performed on the data that need to be verified in the trusted computing environment according to the ledger information (to verify whether a message digest of the data that need to be verified matches a message digest obtained by decrypting the ledger information). If the message digests do not match or there is no corresponding ledger information in the blockchain (that is, the data that need to be verified is not verified), it indicates that the local raw data has been tampered with, and the trusted computing node stops operating. If the message digests match (that is, the data that need to be verified is authentic), the trusted computing node performs subsequent data processing (such as calculating a conversion rate or extracting sensitive information) on the data that need to be verified, signs a processing result by using a public key of a trusted computing node that needs to view the processing result, and then stores the result and the signature in the blockchain as needed. Depending on different scenarios, the processing result may be off-chain raw data (that is, a scenario of verifying and publicizing trustworthiness of the off-chain data), or may be a result of a specific operation (that is, a result of a joint operation derived by combining on-line and off-chain data, such as calculation of a conversion rate). A node on the blockchain may determine, by verifying remote proof information of a trusted computing environment and a signature of the processing result, that the on-chain processing result is obtained through processing by a trusted computing environment and is reliable data.

FIG. 4C is a schematic diagram showing that off-chain data cannot communicate with a blockchain in real time according to an embodiment of this application. As shown in FIG. 4C, the off-chain data cannot communicate with the blockchain in real time due to a network environment and other limitations, and a certificate cannot be on-chain when the data is generated. After the trusted computing node establishes a connection to the blockchain in the manner shown in FIG. 4A, the trusted computing environment may deposit a certificate off-chain for newly generated service (original) data. When off-chain data is generated, the trusted computing environment reads the off-chain data, adds a timestamp as needed, signs the raw data by using the private key corresponding to the trusted computing node, and stores the raw data the digital signature (and the timestamp) in an off-chain storage space as ledger information. When needing to use the off-chain data, the trusted computing node may obtain the corresponding data that need to be verified and ledger information from the storage space, and perform verification on the data that need to be verified in the trusted computing environment by using the ledger information (verify whether a message digest of the data that need to be verified matches a message digest obtained by decrypting the ledger information). If the message digests do not match or there is no corresponding ledger information in the blockchain (that is, the data that need to be verified is not verified), it indicates that the local raw data has been tampered with, and the trusted computing node stops operating. If the message digests match (that is, the data that need to be verified is authentic), the trusted computing node uploads, to the blockchain according to specific requirements, the raw data or a result obtained by processing the raw data by using a pre-agreed algorithm, and attaches a new signature to the uploaded data. The blockchain node may determine whether returned information is reliable by performing verification on a signature returned by the trusted computing node.

In one embodiment, if the trusted computing environment returns the raw data (that is, data requested by the blockchain can be publicized), the blockchain node may directly perform verification on raw data, a timestamp, and a signature during depositing of the certificate, to verify again whether the data has been tampered with.

The embodiments of this application provide a mechanism for intercommunication between a blockchain and off-chain data based on a trusted computing node. The interaction between the trusted computing node and the blockchain can ensure that the off-chain data obtained and used by the blockchain is authentic and reliable. In addition, the embodiments of this application provide a mechanism for intercommunication between a blockchain and off-chain confidential data, so that the blockchain can update on-chain information by using the off-chain data without publicizing the off-chain data. In addition, during the entire process, the blockchain can identify authenticity and reliability of the off-chain data, thereby avoiding trustworthiness impact from the off-chain data.

An embodiment of this application further provides a data processing method, including: obtaining raw data; signing the raw data by using a private key of the first trusted computing node to obtain a digital signature corresponding to the raw data, and storing the digital signature into the blockchain network as ledger information of the raw data; obtaining data that need to be verified corresponding to the raw data, transmitting the data that need to be verified to a trusted computing environment, querying the ledger information from the blockchain network, and performing verification on the data that need to be verified in the trusted computing environment according to the ledger information; and processing the data that need to be verified after the data that need to be verified is authentic, and returning a processing result of the data that need to be verified to the blockchain network.

**In** one embodiment, after the processing the data that need to be verified, the method further includes: signing a processing result of the data that need to be verified by using a public key of a second trusted computing node to obtain a signature result, the second trusted computing node being a trusted computing node that needs to view the processing result of the data that need to be verified; and returning the signature result for the signing of the processing result of the data that need to be verified to the blockchain network.

In one embodiment, the querying the ledger information from the blockchain network, and performing verification on the data that need to be verified in the trusted computing environment according to the ledger information includes: decrypting the ledger information by using a public key of the first trusted computing node to obtain a first message digest; performing message digest calculation on the data that need to be verified to obtain a second message digest; and verifying whether the first message digest matches the second message digest.

In one embodiment, the method further includes: sending remote proof information corresponding to the first trusted computing node and the public key of the first trusted computing node to the blockchain network; and obtaining a certificate corresponding to the first trusted computing node, the certificate being generated and sent after the blockchain network verifies the remote proof information, and the processing result of the data that need to be verified that is returned to the blockchain network carrying the certificate corresponding to the first trusted computing node.

An embodiment of this application provides another data processing method, applied to the target trusted computing node, and including: when raw data is generated, obtaining the raw data, the raw data being data outside a blockchain network; signing the raw data by using a private key corresponding to the target trusted computing node to obtain a digital signature corresponding to the raw data, and storing the raw data and the digital signature in a storage space outside the blockchain network; when data in the storage space outside the blockchain network needs to be obtained, obtaining data that need to be verified and the digital signature that correspond to the raw data from the storage space, and performing verification on the data that need to be verified in a trusted computing environment by using the digital signature; and processing the data that need to be verified, and returning a processing result of the data that need to be verified to the blockchain network.

The methods of the embodiments of this application are described in detail above. To better implement the foregoing solutions of the embodiments of this application, correspondingly, an apparatus of the embodiments of this application is provided below.

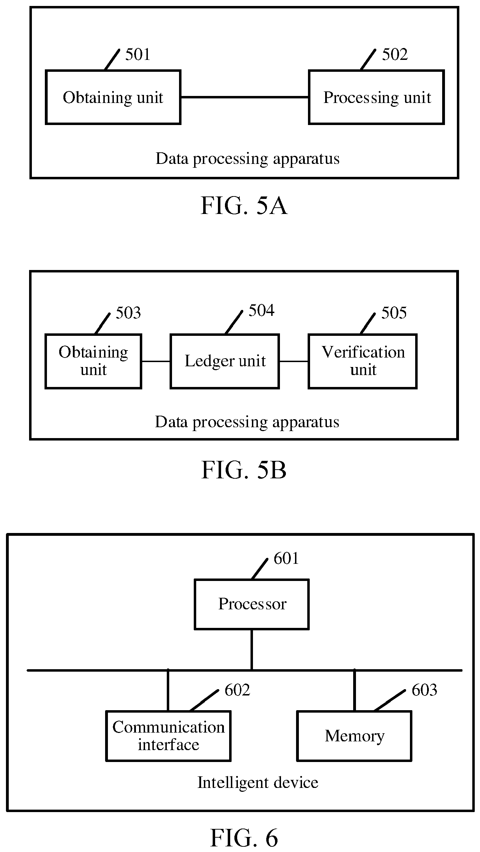

Referring to FIG. 5A, FIG. 5A is a schematic structural diagram of a data processing apparatus according to an embodiment of this application. The apparatus may be mounted on the intelligent device in the foregoing method embodiment. The intelligent device may be specifically the first trusted computing node 101 or the second trusted computing node 102 shown in FIG. 1A. The data processing apparatus shown in FIG. 5A may be configured to perform some or all functions in the method embodiments described in FIG. 2A and FIG. 3A. Detailed descriptions of units are as follows:

An obtaining unit 501 is configured to obtain data that need to be verified from a target trusted computing node; and obtain first ledger data corresponding to the data that need to be verified from an accessed blockchain network, the first ledger data being obtained by signing a first message digest by using a private key of the target trusted computing node and being stored in the blockchain network by the target trusted computing node, and the first message digest being obtained by performing message digest calculation on raw data corresponding to the data that need to be verified.

A processing unit 502 is configured to decrypt the first ledger data by using a public key of the target trusted computing node to obtain the first message digest; perform message digest calculation on the data that need to be verified to obtain a second message digest; and
determine a verification result of the data that need to be verified according to the first message digest and the second message digest.

In an embodiment, the data that need to be verified includes a ledger timestamp, and the blockchain network stores a timestamp of each piece of ledger data. The obtaining unit 501 is specifically configured to obtain the first ledger data corresponding to the data that need to be verified from the accessed blockchain network according to the ledger timestamp, a timestamp of the obtained first ledger data matching the ledger timestamp.

In an embodiment, the processing unit 502 is further configured to:
send remote proof information corresponding to the first trusted computing node and a public key of the first trusted computing node to the blockchain network, and obtain a certificate corresponding to the first trusted computing node from the blockchain network, the certificate being generated and sent after the blockchain network verifies the remote proof information.

After determining the verification result of the data that need to be verified according to the first message digest and the second message digest, the processing unit 502 is further configured to:
sign the verification result by using a public key corresponding to a second trusted computing node to obtain verification result signature data, the second trusted computing node being a trusted computing node that needs to view the verification result; and
send a request message carrying the verification result signature data to the blockchain network through the first trusted computing node,
the request message further carrying a certificate corresponding to the first trusted computing node, and the request message being used for instructing that the verification result signature data is stored in the blockchain network after verifying the certificate; or
the request message being used for instructing that the verification result signature data is stored in the blockchain network according to a certificate sent to the first trusted computing node.

In an embodiment, the raw data includes service data, and the processing unit 502 is further configured to:
obtain service data and performing message digest calculation on the service data to obtain a third message digest;
sign the third message digest by using a private key corresponding to the first trusted computing node to obtain second ledger data; and
upload the second ledger data and the certificate to the blockchain network for blockchain on-chain processing.

In an embodiment, the raw data includes service data, and the processing unit 502 is further configured to:
obtain the service data and perform message digest calculation on the service data to obtain a fourth message digest;
add the fourth message digest to a message digest set, the message digest set recording at least two message digests;
in response to detecting that the message digest set satisfies an on-chain condition, sign a message digest recorded in the message digest set by using a private key corresponding to the first trusted computing node to obtain third ledger data; and
upload the third ledger data and the certificate to the blockchain network for blockchain on-chain processing.

In an embodiment, the data that need to be verified is advertisement distribution data, the data that need to be verified includes a first user set, and the first user set includes a first user object identifier; and the processing unit 502 is further configured to:
when the verification result indicates that the data that need to be verified is authentic, obtain associated data corresponding to the data that need to be verified, the associated data being advertisement-associated data, the advertisement-associated data including a second user set, and the second user set including a second user object identifier;
perform an intersection set operation on the first user set and the second user set to obtain a third user set; and
determine advertisement promotion information based on the first user set, the second user set, and the third user set.

In an embodiment, the processing unit 502 is further configured to:
encrypt the advertisement promotion information by using a public key of a query trusted computing node for querying the advertisement promotion information, the query trusted computing node including trusted computing node corresponding to the data that need to be verified and a trusted computing node corresponding to the associated data; and
upload encrypted data to the blockchain network for blockchain on-chain processing.

In an embodiment, the obtaining unit 501 is specifically configured to: obtain the first ledger data corresponding to the data that need to be verified from the accessed blockchain network;
send a first ledger data obtaining request to the blockchain network, the first ledger data obtaining request being used for triggering the blockchain network to invoke a first smart contract to obtain the first ledger data corresponding to the data that need to be verified; and
obtain the first ledger data of the blockchain network in response to the first ledger data obtaining request.

The processing unit 502 is specifically configured to: store the verification result signature data into the blockchain network; and
send an on-chain request to the blockchain network, the on-chain request carrying the verification result signature data, and the on-chain request being used for triggering the blockchain network to invoke a second smart contract to store the verification result signature data into the blockchain network.

In an embodiment, the processing unit 502 is further configured to: in response to that the verification result indicates that the data that need to be verified is authentic, process the data that need to be verified and first data stored in the first trusted computing node to obtain a first result, and send the first result to a terminal device associated with the first trusted computing node, where the processing the data that need to be verified and first data stored in the first trusted computing node includes intersection set calculation processing or conversion rate calculation processing.

In an embodiment, the data that need to be verified is encrypted data obtained by the target trusted computing node by encrypting the raw data by using a target key, and the processing unit 502 is further configured to:

receive, from the target trusted computing node, a first slice of the target key that is encrypted by using the public key corresponding to the first trusted computing node, and decrypt the encrypted first slice of the target key by using the private key corresponding to the first trusted computing node to obtain the first slice of the target key;
encrypt the first slice of the target key by using a public key of a third trusted computing node, and send the encrypted first slice to the third trusted computing node;
receive, from the third trusted computing node, a second slice of the target key by using the public key corresponding to the first trusted computing node, and decrypt the encrypted second slice of the target key by using the private key corresponding to the first trusted computing node to obtain the second slice of the target key;
obtain the target key based on the first slice of the target key and the second slice of the target key; and
decrypt the encrypted data by using the target key to obtain the data that need to be verified.

FIG. 5B is a schematic structural diagram of another data processing apparatus according to an embodiment of this application. The apparatus may be mounted on the intelligent device in the foregoing method embodiment. The intelligent device may be specifically the first trusted computing node 101 or the second trusted computing node 102 shown in FIG. 1A. That the apparatus is mounted on the second trusted computing node 102 shown in FIG. 1A is used as an example for description. As shown in FIG. 5B, the data processing apparatus includes:
an obtaining unit 503, configured to send remote proof information corresponding to a target trusted computing node and a public key of the target trusted computing node to a blockchain network, to obtain a certificate corresponding to the target trusted computing node from the blockchain network;
a ledger unit 504, configured to obtain raw data; perform message digest calculation on the raw data to obtain a message digest of the raw data, and sign the message digest by using a private key of the target trusted computing node to obtain ledger data; and upload the ledger data to the blockchain network, and provide the blockchain network with the certificate to prove that the ledger data is trustworthy; and
a verification unit 505, configured to send data that need to be verified corresponding to the raw data to a first trusted computing node, so that the first trusted computing node performs verification on the data that need to be verified by using the ledger data.

In one embodiment, the raw data is service data. Therefore, the ledger unit 504 obtains the service data; performs message digest calculation on the service data to obtain a message digest corresponding to the service data; adds the message digest corresponding to the service data to a message digest set, the message digest set being used for storing message digests generated within a preset time period, and the message digest set recording at least two message digests; in response to detecting that the message digest set satisfies an on-chain condition, signs a message digest recorded in the message digest set by using the private key corresponding to the target trusted computing node to obtain ledger data corresponding to the message digest set or ledger data; and uploads the obtained ledger data corresponding to the message digest set to the blockchain network for blockchain on-chain processing.

According to one embodiment, the data that need to be verified is sent to N trusted computing nodes including the first trusted computing node, N being a positive integer. The verification unit 505 is configured to encrypt the raw data by using a target key to obtain encrypted data; and divide the target key into N slices, encrypt a slice of a target key corresponding to each of the N trusted computing nodes by using a public key of the each trusted computing node, and send, to the each trusted computing node, the encrypted data and the encrypted slice of the key that corresponds to the trusted computing node.

According to one embodiment of this application, some of the steps involved in the data processing methods shown in FIG. 2A and FIG. 3A may be performed by the units in the data processing apparatus shown in FIG. 5A. For example, step S202 shown in FIG. 2A may be performed by the obtaining unit 501 shown in FIG. 5A, and step S201, step S203, and step S204 may be performed by the processing unit 502 shown in FIG. 5A. Step S302 shown in FIG. 3A may be performed by the obtaining unit 501 shown in FIG. 5A, and step S301 and step S303 to step S309 may be performed by the processing unit 502 shown in FIG. 5A. Some of the steps involved in the data processing method shown in FIG. 2B may be performed by the units in the data processing apparatus shown in FIG. 5B. For example, step S205 shown in FIG. 2B may be performed by the obtaining unit 503 shown in FIG. 5B, step S206, step S207, and step S208 may be performed by the ledger unit 504 shown in FIG. 5B, and step S209 may be performed by the processing unit 505 shown in FIG. 5B. Units of the data processing apparatus shown in FIG. 5A and FIG. 5B may be separately or wholly combined into one or several other units, or one (or more) of the units herein may further be divided into multiple units of smaller functions. In this way, same operations can be implemented, and implementation of the technical effects of the embodiments of this application is not affected. The foregoing units are divided based on logical functions. In one embodiment, a function of one unit may also be implemented by multiple units, or functions of multiple units are implemented by one unit. In another embodiment of this application, the data processing apparatus may also include other units. In one embodiment, the functions may also be cooperatively implemented by other units and may be cooperatively implemented by a plurality of units.

According to another embodiment of this application, a computer program (including program code) that can perform the steps in the corresponding method shown in FIG. 2A, FIG. 2B, and FIG. 3A may be run on a general computing apparatus, such as a computer, which includes processing elements and storage elements such as a central processing unit (CPU), a random access memory (RAM), and a read-only memory (ROM), to construct the data processing apparatus shown in FIG. 5A and FIG. 5B and implement the data processing method in the embodiments of this application. The computer program may be recorded in, for example, a computer readable recording medium, and may be loaded into the foregoing computing device by using the computer readable recording medium, and run on the computing apparatus.

Based on the same inventive idea, the problem solving principles and beneficial effects of the data processing apparatuses provided in the embodiments of this application are similar to the problem solving principles and beneficial effects of the data processing apparatuses in the method embodiments of this application. For the principles and beneficial effects, refer to the principles and beneficial effects of the implementations of the methods. For ease of description, details are not described herein again.

Referring to FIG. 6, FIG. 6 is a schematic structural diagram of an intelligent device according to an embodiment of this application. The intelligent device includes at least a processor 601, a communication interface 602, and a memory 603. The processor 601, the communication interface 602, and the memory 603 may be connected through a bus or in another manner. The processor 601 (or referred to as a central processing unit (CPU)) is a computing core and control core of a terminal, and can parse various types of instructions in the terminal and process various types of data of the terminal. For example, the CPU may be configured to parse a power-on/off instruction sent by a user to the terminal, and control the terminal to perform a power-on/off operation. For another example, the CPU can transmit various types of interaction data between structures inside the terminal, and so on. The communication interface 602 may include a standard wired interface or wireless interface (for example, WI-FI or a mobile communication interface), and may be configured to receive and send data under control of the processor 601. The communication interface 602 may be further configured for transmission and interaction of data inside the terminal. The memory 603 is a storage device in the terminal, and configured to store programs and data. It may be understood that the memory 603 herein may include an internal memory of the terminal and certainly may also include an extended memory supported by the terminal. The memory 603 provides a storage space, and the storage space stores an operating system of the terminal. The operating system may include, but is not limited to: an Android system, an iOS system, a Windows Phone system, and the like. This is not limited in this application.

In this embodiment, the processor 601 runs executable program code in the memory 603 to perform the following operations:
obtaining data that need to be verified from a target trusted computing node through the communication interface 602; obtaining first ledger data corresponding to the data that need to be verified from an accessed blockchain network, the first ledger data being obtained by signing a first message digest by using a private key of the target trusted computing node and being stored in the blockchain network by the target trusted computing node, and the first message digest being obtained by performing message digest calculation on raw data corresponding to the data that need to be verified; and
decrypting the first ledger data by using a public key of the target trusted computing node to obtain the first message digest; performing message digest calculation on the data that need to be verified to obtain a second message digest; and
determining a verification result of the data that need to be verified according to the first message digest and the second message digest.

In an embodiment, the data that need to be verified includes a ledger timestamp, and the blockchain network stores a timestamp of each piece of ledger data. A specific embodiment in which the processor 601 obtains the first ledger data corresponding to the data that need to be verified from the accessed blockchain network is:
obtaining the first ledger data corresponding to the data that need to be verified from the accessed blockchain network according to the ledger timestamp,
a timestamp of the obtained first ledger data matching the ledger timestamp.

In an embodiment, the processor 601 is further configured to:
send remote proof information corresponding to the first trusted computing node and a public key of the first trusted computing node to the blockchain network to obtain a certificate corresponding to the first trusted computing node from the blockchain network, the certificate being generated and sent after the blockchain network verifies the remote proof information; and
after determining the verification result of the data that need to be verified according to the first message digest and the second message digest, the processor 601 is further configured to:
sign the verification result by using a public key corresponding to a second trusted computing node to obtain verification result signature data, the second trusted computing node being a trusted computing node that needs to view the verification result; and
send a request message carrying the verification result signature data to the blockchain network through the first trusted computing node,
the request message further carrying a certificate corresponding to the first trusted computing node, and the request message being used for instructing that the verification result signature data is stored in the blockchain network after verifying the certificate; or
the request message being used for instructing that the verification result signature data is stored in the blockchain network according to a certificate sent to the first trusted computing node.

In an embodiment, the processor 601 is further configured to:
obtain service data and perform message digest calculation on the service data to obtain a third message digest;
sign the third message digest by using a private key corresponding to the first trusted computing node to obtain second ledger data; and
upload the second ledger data and the certificate to the blockchain network for blockchain on-chain processing.

In an embodiment, the processor 601 is further configured to:
obtain service data and perform message digest calculation on the service data to obtain a fourth message digest;
add the fourth message digest to a message digest set, the message digest set recording at least two message digests;
in response to detecting that the message digest set satisfies an on-chain condition, sign a message digest recorded in the message digest set by using a private key corresponding to the first trusted computing node to obtain third ledger data; and
upload the third ledger data and the certificate to the blockchain network for blockchain on-chain processing.

In an embodiment, the data that need to be verified is advertisement distribution data that need to be verified, the data includes a first user set, and the first user set includes a first user object identifier; and the processor 601 is further configured to:
when the verification result indicates that the data that need to be verified is authentic, obtain associated data corresponding to the data that need to be verified, the associated data being advertisement-associated data, the advertisement-associated data including a second user set, and the second user set including a second user object identifier;
perform an intersection set operation on the first user set and the second user set to obtain a third user set; and
determine advertisement promotion information based on the first user set, the second user set, and the third user set.

In an embodiment, the processor 601 is further configured to:
encrypt the advertisement promotion information by using a public key of a query trusted computing node for querying the advertisement promotion information, the query trusted computing node including trusted computing node corresponding to the data that need to be verified and a trusted computing node corresponding to the associated data; and
upload encrypted data to the blockchain network for blockchain on-chain processing.

In an embodiment, a specific embodiment in which the processor 601 obtains the first ledger data corresponding to the data that need to be verified from the accessed blockchain network is:
sending a first ledger data obtaining request to the blockchain network, the first ledger data obtaining request being used for triggering the blockchain network to invoke a first smart contract to obtain the first ledger data corresponding to the data that need to be verified; and
obtaining the first ledger data of the blockchain network in response to the first ledger data obtaining request.

A specific embodiment in which the processor 601 stores the verification result signature data into the blockchain network is:
sending an on-chain request to the blockchain network, the on-chain request carrying the verification result signature data, and the on-chain request being used for triggering the blockchain network to invoke a second smart contract to store the verification result signature data into the blockchain network.

Based on the same inventive idea, the problem solving principles and beneficial effects of the intelligent device provided in the embodiments of this application are similar to the problem solving principles and beneficial effects of the data processing methods in the method embodiments of this application. For the principles and beneficial effects, refer to the principles and beneficial effects of the implementations of the methods. For ease of description, details are not described herein again.

An embodiment of this application further provides a computer-readable storage medium, storing one or more instructions, the one or more instructions being adapted to be loaded by the processor to perform the data processing method described in the foregoing method embodiments.

An embodiment of this application further provides a computer program product including instructions, the instructions, when run on a computer, causing the computer to perform the data processing method described in the foregoing method embodiments.

An embodiment of this application further provides a computer program product or a computer program. The computer program product or the computer program includes computer instructions, and the computer instructions are stored in a computer-readable storage medium. A processor of a computer device reads the computer instructions from the computer-readable storage medium, and executes the computer instructions, to cause the computer device to perform the data processing method described above.

The steps in the methods of the embodiments of this application may be rearranged, combined, and deleted according to specific requirements.

The modules in the apparatuses of the embodiments of this application may be combined, divided, and deleted according to specific requirements.

A person of ordinary skill in the art may understand that all or some of the steps of the methods in the foregoing embodiments may be implemented by a program instructing relevant hardware. The program may be stored in a computer-readable storage medium. The readable storage medium may include a flash disk, a read-only memory (ROM), a random access memory (RAM), a magnetic disk, an optical disc, and the like.

The foregoing descriptions are merely exemplary embodiments of this application, and are not intended to limit the scope of this application. A person skilled in the art may understand all or some processes of the foregoing embodiments, and equivalent modifications made according to the claims of this application shall still fall within the scope of the present disclosure.

## Claims

1. A data processing method, applied to a first trusted computing node, and comprising:
obtaining (S201) data that need to be verified from a target trusted computing node;
obtaining (S202) first ledger data corresponding to the data that need to be verified from an accessed blockchain network, the first ledger data being obtained by signing a first message digest by using a private key of the target trusted computing node and being stored in the blockchain network by the target trusted computing node, and the first message digest being obtained by performing message digest calculation on raw data corresponding to the data that need to be verified;
decrypting (S203) the first ledger data by using a public key of the target trusted computing node to obtain the first message digest;
performing (S203) message digest calculation on the data that need to be verified to obtain a second message digest; and
determining (S204) a verification result of the data that need to be verified according to the first message digest and the second message digest;
sending (S301) remote proof information corresponding to the first trusted computing node and a public key of the first trusted computing node to the blockchain network to obtain a certificate corresponding to the first trusted computing node from the blockchain network, the certificate being generated and sent after the blockchain network verifies the remote proof information; and
after determining the verification result of the data that need to be verified according to the first message digest and the second message digest, the method further comprises:
signing the verification result by using a public key corresponding to a second trusted computing node to obtain verification result signature data, the second trusted computing node being a trusted computing node that needs to view the verification result; and
sending a request message carrying the verification result signature data to the blockchain network through the first trusted computing node,
the request message further carrying the certificate corresponding to the first trusted computing node, and being used for instructing that the verification result signature data is stored in the blockchain network after verifying the certificate; or
the request message being used for instructing that the verification result signature data is stored in the blockchain network according to an identifier of the first trusted computing node, and the identifier being stored in the blockchain network after verifying the remote proof information.

2. The method according to claim 1, wherein the data that need to be verified comprises a ledger timestamp, and a timestamp of each piece of ledger data is stored in the blockchain network; and the obtaining the first ledger data corresponding to the data that need to be verified from the accessed blockchain network comprises:
obtaining the first ledger data corresponding to the data that need to be verified from the accessed blockchain network according to the ledger timestamp,
a timestamp of the obtained first ledger data matching the ledger timestamp.

3. The method according to claim 1, further comprising:
obtaining (S302) service data and performing message digest calculation on the service data to obtain a third message digest;
signing (S303) the third message digest by using a private key corresponding to the first trusted computing node to obtain second ledger data; and
uploading (S303) the second ledger data and the certificate to the blockchain network for blockchain on-chain processing.

4. The method according to claim 1, further comprising:
obtaining service data and performing message digest calculation on the service data to obtain a fourth message digest;
adding the fourth message digest to a message digest set, the message digest set recording at least two message digests;
in response to detecting that the message digest set satisfies a condition to be uploaded to the blockchain, signing a message digest recorded in the message digest set by using a private key corresponding to the first trusted computing node to obtain third ledger data; and
uploading the third ledger data and the certificate to the blockchain network for blockchain on-chain processing.

5. The method according to claim 1, wherein the data that need to be verified is advertisement distribution data, the data that need to be verified comprises a first user set, the first user set comprises a first user object identifier, and the method further comprises:
when the verification result indicates that the data that need to be verified is authentic, obtaining associated data corresponding to the data that need to be verified, the associated data being advertisement-associated data, the advertisement-associated data comprising a second user set, and the second user set comprising a second user object identifier;
performing an intersection set operation on the first user set and the second user set to obtain a third user set; and
determining advertisement promotion information based on the first user set, the second user set, and the third user set.

6. The method according to claim 5, further comprising:
encrypting the advertisement promotion information by using a public key of a query trusted computing node for querying the advertisement promotion information, the query trusted computing node comprising a trusted computing node corresponding to the data that need to be verified and a trusted computing node corresponding to the associated data; and
uploading encrypted data to the blockchain network for blockchain on-chain processing.

7. The method according to claim 1, wherein the obtaining first ledger data corresponding to the data that need to be verified from an accessed blockchain network comprises:
sending a first ledger data obtaining request to the blockchain network, the first ledger data obtaining request being used for triggering the blockchain network to invoke a first smart contract to obtain the first ledger data corresponding to the data that need to be verified; and
obtaining the first ledger data of the blockchain network in response to the first ledger data obtaining request; and
the verification result signature data being stored in the blockchain network comprises:
sending an uploading request to the blockchain network, the uploading request carrying the verification result signature data, and the uploading request being used for triggering the blockchain network to invoke a second smart contract to store the verification result signature data in the blockchain network.

8. The method according to any one of claims 1 to 7, further comprising:
in response to that the verification result indicates that the data that need to be verified is authentic, processing the data that need to be verified and first data stored in the first trusted
computing node to obtain a first result, and sending the first result to a terminal device associated with the first trusted
computing node, wherein the processing the data that need to be verified and first data stored in the first trusted computing node comprises intersection set calculation processing or conversion rate calculation processing.

9. An intelligent device, comprising a memory and a processor, wherein
the memory is configured to store a computer program; and
the processor is configured to execute the computer program to perform the data processing method according to any one of claims 1 to 8.

10. A computer-readable storage medium for storing a computer program, which when executed by a processor, causes the processor to perform the data processing method according to any one of claims 1 to 8.

## Patentansprüche

1. Ein Datenverarbeitungsverfahren, das auf einen ersten vertrauenswürdigen Rechenknoten angewendet wird und umfasst:
Erhalten (S201) von Daten, die verifiziert werden müssen, von einem vertrauenswürdigen Ziel-Rechenknoten;
Erhalten (S202) erster Ledger-Daten, die den Daten, die verifiziert werden müssen, entsprechen, von einem Blockchain-Netzwerk, auf das zugegriffen wird, wobei die ersten Ledger-Daten durch Signieren eines ersten Nachrichten-Digests unter Verwendung eines privaten Schlüssels des vertrauenswürdigen Ziel-Rechenknotens erhalten und durch den vertrauenswürdigen Ziel-Rechenknoten in dem Blockchain-Netzwerk gespeichert werden und wobei der erste Nachrichten-Digest durch Durchführen einer Nachrichten-Digest-Berechnung an Rohdaten, die den Daten, die verifiziert werden müssen, entsprechen, erhalten wird;
Entschlüsseln (S203) der ersten Ledger-Daten unter Verwendung eines öffentlichen Schlüssels des vertrauenswürdigen Ziel-Rechenknotens, um den ersten Nachrichten-Digest zu erhalten;
Durchführen (S203) einer Nachrichten-Digest-Berechnung an den Daten, die verifiziert werden müssen, um einen zweiten Nachrichten-Digest zu erhalten; und
Bestimmen (S204) eines Verifizierungsergebnisses der Daten, die verifiziert werden müssen, gemäß dem ersten Nachrichten-Digest und dem zweiten Nachrichten-Digest;
Senden (S301) von Fernnachweisinformationen, die dem ersten vertrauenswürdigen Rechenknoten entsprechen, und eines öffentlichen Schlüssels des ersten vertrauenswürdigen Rechenknotens an das Blockchain-Netzwerk, um ein Zertifikat, das dem ersten vertrauenswürdigen Rechenknoten entspricht, von dem Blockchain-Netzwerk zu erhalten, wobei das Zertifikat erzeugt und gesendet wird, nachdem das Blockchain-Netzwerk die Fernnachweisinformationen verifiziert hat; und
wobei das Verfahren nach dem Bestimmen des Verifizierungsergebnisses der Daten, die verifiziert werden müssen, gemäß dem ersten Nachrichten-Digest und dem zweiten Nachrichten-Digest ferner umfasst:
Signieren des Verifizierungsergebnisses unter Verwendung eines öffentlichen Schlüssels, der einem zweiten vertrauenswürdigen Rechenknoten entspricht, um Verifizierungsergebnis-Signaturdaten zu erhalten, wobei der zweite vertrauenswürdige Rechenknoten ein vertrauenswürdiger Rechenknoten ist, der das Verifizierungsergebnis einsehen muss; und
Senden einer Anforderungsnachricht, welche die Verifizierungsergebnis-Signaturdaten trägt, über den ersten vertrauenswürdigen Rechenknoten an das Blockchain-Netzwerk,
wobei die Anforderungsnachricht ferner das Zertifikat trägt, das dem ersten vertrauenswürdigen Rechenknoten entspricht, und zum Anweisen verwendet wird, dass die Verifizierungsergebnis-Signaturdaten nach dem Verifizieren des Zertifikats in dem Blockchain-Netzwerk gespeichert werden; oder
wobei die Anforderungsnachricht zum Anweisen verwendet wird, dass die Verifizierungsergebnis-Signaturdaten gemäß einer Kennung des ersten vertrauenswürdigen Rechenknotens in dem Blockchain-Netzwerk gespeichert werden, und wobei die Kennung nach dem Verifizieren der Fernnachweisinformationen in dem Blockchain-Netzwerk gespeichert wird.

2. Das Verfahren nach Anspruch 1, wobei die Daten, die verifiziert werden müssen, einen Ledger-Zeitstempel umfassen und ein Zeitstempel jedes Ledger-Datenelements in dem Blockchain-Netzwerk gespeichert ist; und wobei das Erhalten der ersten Ledger-Daten, die den Daten, die verifiziert werden müssen, entsprechen, von dem Blockchain-Netzwerk, auf das zugegriffen wird, umfasst:
Erhalten der ersten Ledger-Daten, die den Daten, die verifiziert werden müssen, entsprechen, von dem Blockchain-Netzwerk, auf das zugegriffen wird, gemäß dem Ledger-Zeitstempel,
wobei ein Zeitstempel der erhaltenen ersten Ledger-Daten mit dem Ledger-Zeitstempel übereinstimmt.

3. Das Verfahren nach Anspruch 1, ferner umfassend:
Erhalten (S302) von Dienstdaten und Durchführen einer Nachrichten-Digest-Berechnung an den Dienstdaten, um einen dritten Nachrichten-Digest zu erhalten;
Signieren (S303) des dritten Nachrichten-Digests unter Verwendung eines privaten Schlüssels, der dem ersten vertrauenswürdigen Rechenknoten entspricht, um zweite Ledger-Daten zu erhalten; und
Hochladen (S303) der zweiten Ledger-Daten und des Zertifikats in das Blockchain-Netzwerk zur Blockchain-On-Chain-Verarbeitung.

4. Das Verfahren nach Anspruch 1, ferner umfassend:
Erhalten von Dienstdaten und Durchführen einer Nachrichten-Digest-Berechnung an den Dienstdaten, um einen vierten Nachrichten-Digest zu erhalten;
Hinzufügen des vierten Nachrichten-Digests zu einer Nachrichten-Digest-Menge, wobei die Nachrichten-Digest-Menge mindestens zwei Nachrichten-Digests aufzeichnet;
als Reaktion auf das Erkennen, dass die Nachrichten-Digest-Menge eine Bedingung zum Hochladen in die Blockchain erfüllt, Signieren eines in der Nachrichten-Digest-Menge aufgezeichneten Nachrichten-Digests unter Verwendung eines privaten Schlüssels, der dem ersten vertrauenswürdigen Rechenknoten entspricht, um dritte Ledger-Daten zu erhalten; und
Hochladen der dritten Ledger-Daten und des Zertifikats in das Blockchain-Netzwerk zur Blockchain-On-Chain-Verarbeitung.

5. Das Verfahren nach Anspruch 1, wobei die Daten, die verifiziert werden müssen, Werbeverteilungsdaten sind, die Daten, die verifiziert werden müssen, eine erste Benutzermenge umfassen, die erste Benutzermenge eine erste Benutzerobjektkennung umfasst und das Verfahren ferner umfasst:
wenn das Verifizierungsergebnis angibt, dass die Daten, die verifiziert werden müssen, authentisch sind, Erhalten von zugeordneten Daten, die den Daten, die verifiziert werden müssen, entsprechen, wobei die zugeordneten Daten werbungsbezogene Daten sind, die werbungsbezogenen Daten eine zweite Benutzermenge umfassen und die zweite Benutzermenge eine zweite Benutzerobjektkennung umfasst;
Durchführen einer Schnittmengenoperation an der ersten Benutzermenge und der zweiten Benutzermenge, um eine dritte Benutzermenge zu erhalten; und
Bestimmen von Werbeförderungsinformationen basierend auf der ersten Benutzermenge, der zweiten Benutzermenge und der dritten Benutzermenge.

6. Das Verfahren nach Anspruch 5, ferner umfassend:
Verschlüsseln der Werbeförderungsinformationen unter Verwendung eines öffentlichen Schlüssels eines vertrauenswürdigen Abfrage-Rechenknotens zum Abfragen der Werbeförderungsinformationen, wobei der vertrauenswürdige Abfrage-Rechenknoten einen vertrauenswürdigen Rechenknoten, der den Daten, die verifiziert werden müssen, entspricht, und einen vertrauenswürdigen Rechenknoten, der den zugeordneten Daten entspricht, umfasst; und
Hochladen verschlüsselter Daten in das Blockchain-Netzwerk zur Blockchain-On-Chain-Verarbeitung.

7. Das Verfahren nach Anspruch 1, wobei das Erhalten erster Ledger-Daten, die den Daten, die verifiziert werden müssen, entsprechen, von einem Blockchain-Netzwerk, auf das zugegriffen wird, umfasst:
Senden einer ersten Ledger-Daten-Erhaltungsanforderung an das Blockchain-Netzwerk, wobei die erste Ledger-Daten-Erhaltungsanforderung zum Auslösen des Blockchain-Netzwerks verwendet wird, einen ersten Smart Contract aufzurufen, um die ersten Ledger-Daten, die den Daten, die verifiziert werden müssen, entsprechen, zu erhalten; und
Erhalten der ersten Ledger-Daten des Blockchain-Netzwerks als Reaktion auf die erste Ledger-Daten-Erhaltungsanforderung; und
wobei das Speichern der Verifizierungsergebnis-Signaturdaten in dem Blockchain-Netzwerk umfasst:
Senden einer Hochladeanforderung an das Blockchain-Netzwerk, wobei die Hochladeanforderung die Verifizierungsergebnis-Signaturdaten trägt und die Hochladeanforderung zum Auslösen des Blockchain-Netzwerks verwendet wird, einen zweiten Smart Contract aufzurufen, um die Verifizierungsergebnis-Signaturdaten in dem Blockchain-Netzwerk zu speichern.

8. Das Verfahren nach einem der Ansprüche 1 bis 7, ferner umfassend:
als Reaktion darauf, dass das Verifizierungsergebnis angibt, dass die Daten, die verifiziert werden müssen, authentisch sind, Verarbeiten der Daten, die verifiziert werden müssen, und erster Daten, die in dem ersten vertrauenswürdigen Rechenknoten gespeichert sind, um ein erstes Ergebnis zu erhalten, und Senden des ersten Ergebnisses an ein Endgerät, das dem ersten vertrauenswürdigen Rechenknoten zugeordnet ist, wobei das Verarbeiten der Daten, die verifiziert werden müssen, und erster Daten, die in dem ersten vertrauenswürdigen Rechenknoten gespeichert sind, eine Schnittmengenberechnungsverarbeitung oder eine Konversionsratenberechnungsverarbeitung umfasst.

9. Eine intelligente Vorrichtung, umfassend einen Speicher und einen Prozessor, wobei
der Speicher zum Speichern eines Computerprogramms konfiguriert ist; und
der Prozessor zum Ausführen des Computerprogramms konfiguriert ist, um das Datenverarbeitungsverfahren nach einem der Ansprüche 1 bis 8 durchzuführen.

10. Ein computerlesbares Speichermedium zum Speichern eines Computerprogramms, das bei Ausführung durch einen Prozessor den Prozessor veranlasst, das Datenverarbeitungsverfahren nach einem der Ansprüche 1 bis 8 durchzuführen.

## Revendications

1. Un procédé de traitement de données, appliqué à un premier nœud informatique de confiance, et comprenant :
obtenir (S201) des données qui doivent être vérifiées depuis un nœud informatique de confiance cible ;
obtenir (S202), depuis un réseau de chaîne de blocs auquel il est accédé, de premières données de registre correspondant aux données qui doivent être vérifiées, les premières données de registre étant obtenues en signant un premier condensat de message à l'aide d'une clé privée du nœud informatique de confiance cible et étant stockées dans le réseau de chaîne de blocs par le nœud informatique de confiance cible, et le premier condensat de message étant obtenu en effectuant un calcul de condensat de message sur des données brutes correspondant aux données qui doivent être vérifiées ;
déchiffrer (S203) les premières données de registre à l'aide d'une clé publique du nœud informatique de confiance cible afin d'obtenir le premier condensat de message ;
effectuer (S203) un calcul de condensat de message sur les données qui doivent être vérifiées afin d'obtenir un deuxième condensat de message ; et
déterminer (S204) un résultat de vérification des données qui doivent être vérifiées en fonction du premier condensat de message et du deuxième condensat de message ;
envoyer (S301), au réseau de chaîne de blocs, des informations de preuve à distance correspondant au premier nœud informatique de confiance et une clé publique du premier nœud informatique de confiance afin d'obtenir, depuis le réseau de chaîne de blocs, un certificat correspondant au premier nœud informatique de confiance, le certificat étant généré et envoyé après que le réseau de chaîne de blocs a vérifié les informations de preuve à distance ; et
après avoir déterminé le résultat de vérification des données qui doivent être vérifiées en fonction du premier condensat de message et du deuxième condensat de message, le procédé comprend en outre :
signer le résultat de vérification à l'aide d'une clé publique correspondant à un deuxième nœud informatique de confiance afin d'obtenir des données de signature de résultat de vérification, le deuxième nœud informatique de confiance étant un nœud informatique de confiance qui doit consulter le résultat de vérification ; et
envoyer, via le premier nœud informatique de confiance, un message de demande contenant les données de signature de résultat de vérification au réseau de chaîne de blocs,
le message de demande contenant en outre le certificat correspondant au premier nœud informatique de confiance, et étant utilisé pour donner l'instruction de stocker les données de signature de résultat de vérification dans le réseau de chaîne de blocs après vérification du certificat ; ou
le message de demande étant utilisé pour donner l'instruction de stocker les données de signature de résultat de vérification dans le réseau de chaîne de blocs en fonction d'un identifiant du premier nœud informatique de confiance, et l'identifiant étant stocké dans le réseau de chaîne de blocs après vérification des informations de preuve à distance.

2. Le procédé selon la revendication 1, dans lequel les données qui doivent être vérifiées comprennent un horodatage de registre, et un horodatage de chaque élément de données de registre est stocké dans le réseau de chaîne de blocs ; et l'obtention, depuis le réseau de chaîne de blocs auquel il est accédé, des premières données de registre correspondant aux données qui doivent être vérifiées comprend :
obtenir, depuis le réseau de chaîne de blocs auquel il est accédé, les premières données de registre correspondant aux données qui doivent être vérifiées en fonction de l'horodatage de registre,
un horodatage des premières données de registre obtenues concordant avec l'horodatage de registre.

3. Le procédé selon la revendication 1, comprenant en outre :
obtenir (S302) des données de service et effectuer un calcul de condensat de message sur les données de service afin d'obtenir un troisième condensat de message ;
signer (S303) le troisième condensat de message à l'aide d'une clé privée correspondant au premier nœud informatique de confiance afin d'obtenir de deuxièmes données de registre ; et
téléverser (S303) les deuxièmes données de registre et le certificat vers le réseau de chaîne de blocs pour un traitement sur chaîne de blocs.

4. Le procédé selon la revendication 1, comprenant en outre :
obtenir des données de service et effectuer un calcul de condensat de message sur les données de service afin d'obtenir un quatrième condensat de message ;
ajouter le quatrième condensat de message à un ensemble de condensats de message, l'ensemble de condensats de message enregistrant au moins deux condensats de message ;
en réponse à la détection du fait que l'ensemble de condensats de message satisfait à une condition de téléversement vers la chaîne de blocs, signer un condensat de message enregistré dans l'ensemble de condensats de message à l'aide d'une clé privée correspondant au premier nœud informatique de confiance afin d'obtenir de troisièmes données de registre ; et
téléverser les troisièmes données de registre et le certificat vers le réseau de chaîne de blocs pour un traitement sur chaîne de blocs.

5. Le procédé selon la revendication 1, dans lequel les données qui doivent être vérifiées sont des données de diffusion publicitaire, les données qui doivent être vérifiées comprennent un premier ensemble d'utilisateurs, le premier ensemble d'utilisateurs comprend un premier identifiant d'objet utilisateur, et le procédé comprend en outre :
lorsque le résultat de vérification indique que les données qui doivent être vérifiées sont authentiques, obtenir des données associées correspondant aux données qui doivent être vérifiées, les données associées étant des données associées à une publicité, les données associées à une publicité comprenant un deuxième ensemble d'utilisateurs, et le deuxième ensemble d'utilisateurs comprenant un deuxième identifiant d'objet utilisateur ;
effectuer une opération d'intersection d'ensembles entre le premier ensemble d'utilisateurs et le deuxième ensemble d'utilisateurs afin d'obtenir un troisième ensemble d'utilisateurs ; et
déterminer des informations de promotion publicitaire sur la base du premier ensemble d'utilisateurs, du deuxième ensemble d'utilisateurs et du troisième ensemble d'utilisateurs.

6. Le procédé selon la revendication 5, comprenant en outre :
chiffrer les informations de promotion publicitaire à l'aide d'une clé publique d'un nœud informatique de confiance d'interrogation destiné à interroger les informations de promotion publicitaire, le nœud informatique de confiance d'interrogation comprenant un nœud informatique de confiance correspondant aux données qui doivent être vérifiées et un nœud informatique de confiance correspondant aux données associées ; et
téléverser des données chiffrées vers le réseau de chaîne de blocs pour un traitement sur chaîne de blocs.

7. Le procédé selon la revendication 1, dans lequel l'obtention, depuis un réseau de chaîne de blocs auquel il est accédé, de premières données de registre correspondant aux données qui doivent être vérifiées comprend :
envoyer une première demande d'obtention de données de registre au réseau de chaîne de blocs, la première demande d'obtention de données de registre étant utilisée pour déclencher l'appel, par le réseau de chaîne de blocs, d'un premier contrat intelligent afin d'obtenir les premières données de registre correspondant aux données qui doivent être vérifiées ; et
obtenir les premières données de registre du réseau de chaîne de blocs en réponse à la première demande d'obtention de données de registre ; et
le stockage des données de signature de résultat de vérification dans le réseau de chaîne de blocs comprend :
envoyer une demande de téléversement au réseau de chaîne de blocs, la demande de téléversement contenant les données de signature de résultat de vérification, et la demande de téléversement étant utilisée pour déclencher l'appel, par le réseau de chaîne de blocs, d'un deuxième contrat intelligent afin de stocker les données de signature de résultat de vérification dans le réseau de chaîne de blocs.

8. Le procédé selon l'une quelconque des revendications 1 à 7, comprenant en outre :
en réponse au fait que le résultat de vérification indique que les données qui doivent être vérifiées sont authentiques, traiter les données qui doivent être vérifiées et de premières données stockées dans le premier nœud informatique de confiance afin d'obtenir un premier résultat, et envoyer le premier résultat à un dispositif terminal associé au premier nœud informatique de confiance, dans lequel le traitement des données qui doivent être vérifiées et des premières données stockées dans le premier nœud informatique de confiance comprend un traitement de calcul d'intersection d'ensembles ou un traitement de calcul de taux de conversion.

9. Un dispositif intelligent, comprenant une mémoire et un processeur, dans lequel
la mémoire est configurée pour stocker un programme informatique ; et
le processeur est configuré pour exécuter le programme informatique afin de mettre en œuvre le procédé de traitement de données selon l'une quelconque des revendications 1 à 8.

10. Un support de stockage lisible par ordinateur destiné à stocker un programme informatique qui, lorsqu'il est exécuté par un processeur, amène le processeur à mettre en œuvre le procédé de traitement de données selon l'une quelconque des revendications 1 à 8.
